# EUROPEAN PATENT APPLICATION

(11) **EP 4 822 470 A1**
(43) Date of publication of application: **14.10.2026**
(21) Application number: 26157900.7
(22) Date of filing: 11.02.2026
(51) Int. Cl.: G05B 19/418

(54) **METHODS AND AUTOMATED SYSTEMS FOR ANALYSIS AND PROCESS CONTROL DURING FABRICATION OF WORKPIECES**

(30) Priority: 09.04.2025 US 202519174503
(71) Applicant: The Boeing Company, Arlington, VA 22202 (US)
(72) Inventor: BAUER, Andrew L., Arlington, 22202 (US); REYNOLDS, Carla E., Arlington, 22202 (US)
(74) Representative: Boult Wade Tennant LLP

(57) **Abstract**

Methods for analysis and process control during fabrication of workpieces are disclosed. For example, the method includes: (1) obtaining access to a historical database relating to the fabrication of the workpiece; (2) collecting interim as-built data for an interim version of the workpiece using a quality detection device during the fabrication of the workpiece; (3) processing the interim as-built data and the historical database to identify at least one inconsistency in the interim version of the workpiece; (4) processing the at least one inconsistency and the historical database to identify a probability for each inconsistency; and (5) determining whether each probability is unacceptable or acceptable based at least in part on the historical database. Automated systems for analysis and process control during fabrication of workpieces are also disclosed. For example, the automated system includes an analytical computing device, manufacturing equipment, tooling equipment and an interim as-built data monitoring device.

## Description

### FIELD

The present disclosure relates generally to analysis and process control during fabrication of workpieces and, particularly, to methods and automated systems associated therewith. Various methods include monitoring dynamic parameters during fabrication of the workpiece and optimizing process control parameters to bring as-built data for the workpiece and/or other dynamic fabrication data during the fabrication closer to tolerance or within tolerance. Various automated systems include an analytical computing device and an interim as-built data monitoring device. The various automated systems may also include a dynamic environmental data monitoring device, a dynamic manufacturing equipment data monitoring device and/or a dynamic material condition data monitoring device.

### BACKGROUND

Automated composite manufacturing processes are highly dynamic and non-steady processes with complex requirements for successful in-line process control. Current solutions are "artisan" in nature, requiring qualitative judgement of processes performance which are then manually acted upon with a qualitative control response.

Accordingly, those skilled in the art continue with research and development efforts to improve techniques for analysis and process control during fabrication of workpieces.

In general, a composite structure is a structure that is formed from two or more constituent component materials with different physical and/or chemical properties that, when combined, produce a composite material having characteristics that are different than the characteristics of the individual components materials.

As an example, one type of composite material is carbon fiber reinforced plastic ("CFRP"). CFRP optionally includes one or more composite layers or plies laminated together to form a sheet, laminate or layup. Each of the composite layers or plies can include a reinforcement material and a matrix material. The matrix material surrounds, binds and supports the reinforcement material.

### SUMMARY

Disclosed are examples of methods for analysis and process control during fabrication of a workpiece and automated systems for analysis and process control during fabrication of a workpiece. The following is a non-exhaustive list of examples, which may or may not be claimed, of the subject matter according to the present disclosure.

In an example, the disclosed method for analysis and process control during fabrication of a workpiece includes: (1) obtaining access to a historical database relating to the fabrication of the workpiece; (2) collecting interim as-built data for an interim version of the workpiece using at least one quality detection device during the fabrication of the workpiece; (3) processing the interim as-built data and the historical database to identify at least one inconsistency in the interim version of the workpiece; (4) processing the at least one inconsistency and the historical database to identify a probability for each inconsistency; and (5) determining whether each probability is unacceptable or acceptable based at least in part on the historical database.

In some examples, the disclosed method for analysis and process control during fabrication of a workpiece includes: (1) obtaining access to a historical database relating to the fabrication of the workpiece and to a process control parameter database for a fabrication cell used for fabrication of the workpiece; (2) collecting interim as-built data for an interim version of the workpiece, dynamic environmental data, dynamic manufacturing equipment data and dynamic material condition data during the fabrication of the workpiece; (3) processing the interim as-built data and the historical database to identify at least one inconsistency in the interim version of the workpiece; (4) processing the at least one inconsistency and the historical database to identify a probability for each inconsistency; (5) determining whether each probability is unacceptable or acceptable based at least in part on the historical database; and (6) predicting the fabrication of the workpiece would result in a quality issue if the inconsistency associated with the probability is unacceptable and is not changed during the fabrication.

In some examples, the disclosed automated system for analysis and process control during fabrication of a workpiece includes at least one analytical computing device, manufacturing equipment, tooling equipment and at least one interim as-built data monitoring device. The at least one analytical computing device with access to a historical database. The at least one analytical computing device storing a gridded design structure analysis application program, an inconsistency analysis application program and a probability analysis application program. The manufacturing equipment in a fabrication cell and in operative communication with the at least one analytical computing device. The manufacturing equipment including at least one controller device and at least one robotic manipulator. The tooling equipment in the fabrication cell and configured to at least temporarily retain the workpiece during the fabrication. The at least one interim as-built data monitoring device with access to the historical database. The at least one interim as-built data monitoring device storing an as-built data monitoring application program and an as-built data analysis application program. The at least one interim as-built data monitoring device in operative communication with the at least one analytical computing device. The at least one interim as-built data monitoring device including at least one quality detection device in the fabrication cell.

In yet some examples, the disclosed method for analysis and process control during fabrication of a workpiece includes: (1) obtaining access to a historical database relating to the fabrication of the workpiece; (2) collecting interim as-built data for an interim version of the workpiece using at least one quality detection device during the fabrication of the workpiece; (3) processing the interim as-built data and the historical database to identify at least one inconsistency in the interim version of the workpiece; (4) processing the at least one inconsistency and the historical database to determine whether a probability for each inconsistency is unacceptable; (5) predicting the fabrication of the workpiece would result in a quality issue if the inconsistency associated with the probability is unacceptable and no change is implemented during the fabrication; (6) comparing the interim as-built data to design parameters within design data to identify one or more design parameters for which the interim as-built data is out of tolerance; (7) identifying at least one manufacturing process control parameter within a process control parameter database related to the interim as-built data that is out of tolerance; (8) processing the at least one manufacturing process control parameter to form one or more optimized manufacturing process control parameters that are expected to bring the interim as-built data closer to tolerance or within tolerance and expected to reduce the probability; and (9) communicating the one or more optimized manufacturing process control parameters to one or more communication accounts accessible to an operator of an automated system being used for fabrication of the workpiece during the fabrication.

In some examples, the disclosed method for analysis and process control during fabrication of a workpiece includes: (1) obtaining access to a historical database relating to the fabrication of the workpiece; (2) collecting interim as-built data for an interim version of the workpiece using at least one quality detection device during the fabrication of the workpiece; (3) processing the interim as-built data and the historical database to identify at least one inconsistency in the interim version of the workpiece; (4) processing the at least one inconsistency and the historical database to determine whether a probability for each inconsistency is unacceptable; (5) predicting the fabrication of the workpiece would result in a quality issue if the inconsistency associated with the probability is unacceptable and no change is implemented during the fabrication; (6) collecting dynamic data within a fabrication cell using at least one sensor during the fabrication of the workpiece; (7) comparing the dynamic data to fabrication parameters within the historical database related to the corresponding probability to identify one or more fabrication parameters for which the dynamic data is out of tolerance; (8) identifying at least one manufacturing process control parameter within a process control parameter database related to the dynamic data that is out of tolerance; (9) processing the at least one manufacturing process control parameter to form one or more optimized manufacturing process control parameters that are expected to bring the dynamic data closer to tolerance or within tolerance and expected to reduce the probability; and (10) communicating the one or more optimized manufacturing process control parameters to one or more communication accounts accessible to an operator of an automated system being used for fabrication of the workpiece during the fabrication.

In some examples, the disclosed automated system for analysis and process control during fabrication of a workpiece includes an analytical computing device, manufacturing equipment, tooling equipment and an interim as-built data monitoring device. The analytical computing device with access to a historical database. The manufacturing equipment in a fabrication cell. The tooling equipment is configured to temporarily retain the workpiece. The interim as-built data monitoring device with access to the historical database and including a quality detection device. The interim as-built data monitoring device configured to collect interim as-built data for an interim version of the workpiece using the quality detection device during the fabrication of the workpiece. The interim as-built data monitoring device configured to process the interim as-built data and the historical database to identify an inconsistency in the interim version of the workpiece. The analytical computing device configured to process the inconsistency and the historical database to determine whether a probability for each inconsistency is unacceptable. The analytical computing device configured to predict the fabrication of the workpiece would result in a quality issue if the inconsistency associated with the probability is unacceptable and no change is implemented during the fabrication. The analytical computing device configured to compare the interim as-built data to design parameters within design data to identify one or more design parameters for which the interim as-built data is out of tolerance. The analytical computing device configured to identify a manufacturing process control parameter within a process control parameter database related to the interim as-built data that is out of tolerance. The analytical computing device is configured to process the manufacturing process control parameter to form one or more optimized manufacturing process control parameters that are expected to bring the interim as-built data closer to tolerance or within tolerance and expected to reduce the probability. The analytical computing device configured to communicate the one or more optimized manufacturing process control parameters to one or more communication accounts accessible to an operator of an automated system being used for fabrication of the workpiece during the fabrication.

Other examples of the disclosed methods for analysis and process control during fabrication of a workpiece and automated systems for analysis and process control during fabrication of a workpiece will become apparent from the following detailed description, the accompanying drawings and the appended claims.

### BRIEF DESCRIPTION OF THE DRAWINGS

Fig. 1 is a functional block diagram of an example of analytics-enabled real-time in-line process control for manufacturing;
Fig. 2 is a flow diagram of an example of a method for analysis and process control during fabrication of a workpiece;
Fig. 3, in combination with Fig. 2, is a flow diagram of another example of a method for analysis and process control during fabrication of a workpiece;
Fig. 4, in combination with Figs. 2 and 3, is a flow diagram of yet another example of a method for analysis and process control during fabrication of a workpiece;
Fig. 5, in combination with Figs. 2 and 3, is a flow diagram of still another example of a method for analysis and process control during fabrication of a workpiece;
Fig. 6, in combination with Figs. 2, 3 and 5, is a flow diagram of still yet another example of a method for analysis and process control during fabrication of a workpiece;
Fig. 7, in combination with Figs. 2 and 3, is a flow diagram of another example of a method for analysis and process control during fabrication of a workpiece;
Fig. 8, in combination with Figs. 2, 3 and 7, is a flow diagram of yet another example of a method for analysis and process control during fabrication of a workpiece;
Fig. 9, in combination with Figs. 2 and 3, is a flow diagram of still another example of a method for analysis and process control during fabrication of a workpiece;
Fig. 10, in combination with Figs. 2, 3 and 9, is a flow diagram of still yet another example of a method for analysis and process control during fabrication of a workpiece;
Fig. 11 is a flow diagram of another example of a method for analysis and process control during fabrication of a workpiece;
Fig. 12, in combination with Fig. 11, is a flow diagram of yet another example of a method for analysis and process control during fabrication of a workpiece;
Fig. 13, in combination with Fig. 11, is a flow diagram of still another example of a method for analysis and process control during fabrication of a workpiece;
Fig. 14, in combination with Figs. 11, is a flow diagram of still yet another example of a method for analysis and process control during fabrication of a workpiece;
Fig. 15, in combination with Fig. 11, is a flow diagram of another example of a method for analysis and process control during fabrication of a workpiece;
Fig. 16 is a functional block diagram of an example of an automated system for analysis and process control during fabrication of a workpiece;
Fig. 17 is a perspective view of an example of a fabrication cell for the automated system of Fig. 16;
Fig. 18 is a functional block diagram of an example of an analytical computing device for the automated system of Fig. 16;
Fig. 19 is a functional block diagram of an example of an interim as-built data monitoring device for the automated system of Fig. 16;
Fig. 20 is a block diagram showing examples of manufacturing equipment for the automated system of Fig. 16;
Fig. 21 is a block diagram showing examples of a robotic manipulator for the automated system of Fig. 16;
Fig. 22 is a block diagram showing examples of tooling equipment for the automated system of Fig. 16;
Fig. 23 is an exploded functional view of an example of a composite workpiece for the automated system of Fig. 16;
Fig. 24 is a block diagram showing examples of data stored in a historical database for the automated system of Fig. 16;
Fig. 25 is a block diagram showing examples of design data and interim as-built data for the automated system of Fig. 16;
Fig. 26 is a block diagram showing additional examples of interim as-built data for the automated system of Fig. 16;
Fig. 27 is a block diagram showing examples of a quality detection device for the automated system of Fig. 16;
Fig. 28A is a block diagram showing examples of a manufacturing process control parameter for the automated system of Fig. 16;
Fig. 28B is a block diagram showing examples of a design parameter for the automated system of Fig. 16;
Fig. 29 is a functional block diagram of another example of an automated system for analysis and process control during fabrication of a workpiece;
Fig. 30 is a functional block diagram of an example of a dynamic environmental data monitoring device for the automated system of Fig. 29;
Fig. 31 is a block diagram showing examples of dynamic environmental data for the automated system of Fig. 29;
Fig. 32 is a block diagram showing examples of an environmental sensor for the automated system of Fig. 29;
Fig. 33A is a block diagram showing examples of an environmental parameter for the automated system of Fig. 29;
Fig. 33B is a block diagram showing examples of a communication account for the automated systems of Fig. 16, Fig. 29, Fig. 34 and Fig. 39;
Fig. 34 is a functional block diagram of yet another example of an automated system for analysis and process control during fabrication of a workpiece;
Fig. 35 is a functional block diagram of an example of a dynamic manufacturing equipment data monitoring device for the automated system of Fig. 34;
Fig. 36 is a block diagram showing examples of dynamic manufacturing equipment data for the automated system of Fig. 34;
Fig. 37 is a block diagram showing examples of a manufacturing equipment sensor for the automated system of Fig. 34;
Fig. 38 is a block diagram showing examples of a manufacturing equipment parameter for the automated system of Fig. 29;
Fig. 39 is a functional block diagram of still another example of an automated system for analysis and process control during fabrication of a workpiece;
Fig. 40 is a functional block diagram of an example of a dynamic material condition data monitoring device for the automated system of Fig. 39;
Fig. 41 is a block diagram showing examples of dynamic material condition data for the automated system of Fig. 39;
Fig. 42 is a block diagram showing examples of a condition sensor for the automated system of Fig. 39;
Fig. 43 is a block diagram showing examples of a material parameter for the automated system of Fig. 39;
Figs. 44A-B are a flow diagram of yet another example of a method for analysis and process control during fabrication of a workpiece;
Figs. 45A-B are a flow diagram of still another example of a method for analysis and process control during fabrication of a workpiece;
Fig. 46 is a block diagram of aircraft production and service methodology that implements one or more of the examples of methods for analysis and process control during fabrication of workpieces disclosed herein; and
Fig. 47 is a schematic illustration of an aircraft that incorporates components fabricated using one or more of the examples of methods for analysis and process control during fabrication of workpieces disclosed herein.

### DETAILED DESCRIPTION

The various examples of methods 200, 300, 400, 500, 600, 700, 800, 900, 1000, 1100, 1200, 1300, 1400, 1500, 4400, 4500 for analysis and process control during fabrication of workpieces 1602 disclosed herein provide techniques for analytics-enabled real-time in-process control during the fabrication. The various examples of automated systems 1600 for analysis and process control during fabrication of workpieces 1602 disclosed herein enable the methods 200, 300, 400, 500, 600, 700, 800, 900, 1000, 1100, 1200, 1300, 1400, 1500, 4400, 4500 and techniques for analytics-enabled real-time in-process control.

The various techniques for analytics-enabled real-time in-process control support the prediction of process parameters that need to change to avoid formation of out of tolerance conditions. The various techniques disclosed here also allow for treatment of the process complexity through integration of process and quality data with geometric, dynamic, environmental, and historical contexts. The process may constrain the algorithm to notify a human if certain parameters are met, which brings manual or other corrective actions into play. Changes in material data information to add out time to the process integrate historical data, real time data and analyze to see if the build can be optimized. A loop can be added to the real-time process control that places an operator within the decision-making process rather than just relying upon machine learning and real time inconsistency characterizing algorithms.

The various techniques for analytics-enabled real-time in-process control also support receiving and determining the state of a system based on sensor data. For example, the various techniques may include using sensors to collect data that is used to describe the state of the system/process. The sensors and/or the system may be in communication with a processor. The processor may be configured to, at least, process code that performs a multilayer perceptron machine learning algorithm and/or a long short-term memory machine learning algorithm. The machine learning algorithm(s) may be trained using historical data. The historical data includes historical sensor data and the associated state of the system at the time the sensor data was created. The machine learning algorithm uses the historical data to calculate the probability of a system state based on new sensor data. The process can notify a human if certain parameters are met, which brings manual or other corrective actions into play. The algorithm identifies the parameter having the most significant impact on the classification. Based on the most impactful parameter, automated, and if needed, manual instructs a controller to modify a parameter to prevent defects. The processor alerts a user/system of the classification.

Additionally, the various techniques for analytics-enabled real-time in-process control support a method of manufacturing a composite structure that includes a system with a manufacturing quality analysis device, manufacturing characteristic measurement devices, inconsistency detection devices, and a database system consisting of part design data, engineering requirements for process characteristics, a numerical control program for course plan data, process data, material property and exposure data and quality data. The various techniques also include a method of generating a gridded data structure for registering input and historical data and a separate gridded data structure for analysis and requirements capture. Data generated by the real time detection system is registered to a gridded data structure and can be quantitatively compared to the historical process data or a model thereof in real-time, generating an error measurement or identifying outlier events. Inconsistent process events or inconsistencies within material may generate unique thermal, visual or profilometric signatures. Artificial neural network classifiers, principal component analysis or other algorithms may classify these signatures as unique events and registered to the gridded data structure at the occurrence of the event. The inconsistencies may also be characterized with a quantitative severity metric, differentiating events requiring corrective action from those which do not.

Process or material inconsistencies may be of significance to require automated and/or manual intervention. The manufacturing quality analysis device will consume current system state data (material, process and equipment) and recommend optimized machine control parameters within a set of limits allowed by higher level manufacturing control requirements. The manufacturing quality analysis device will generate alarms in cases where manual or more severe corrective action is required to bring the system under control.

The various techniques for analytics-enabled real-time in-process control also integrate the process and quality data with geometric, dynamical, environmental, and historical contexts into process optimization and control. The various techniques provide a method of gridded data structure registration, a method of characterizing system state outliers, process and materials inconsistencies and mapping to the gridded data structure and a process optimization module for improved measurement, management, optimization and control of lamination processes.

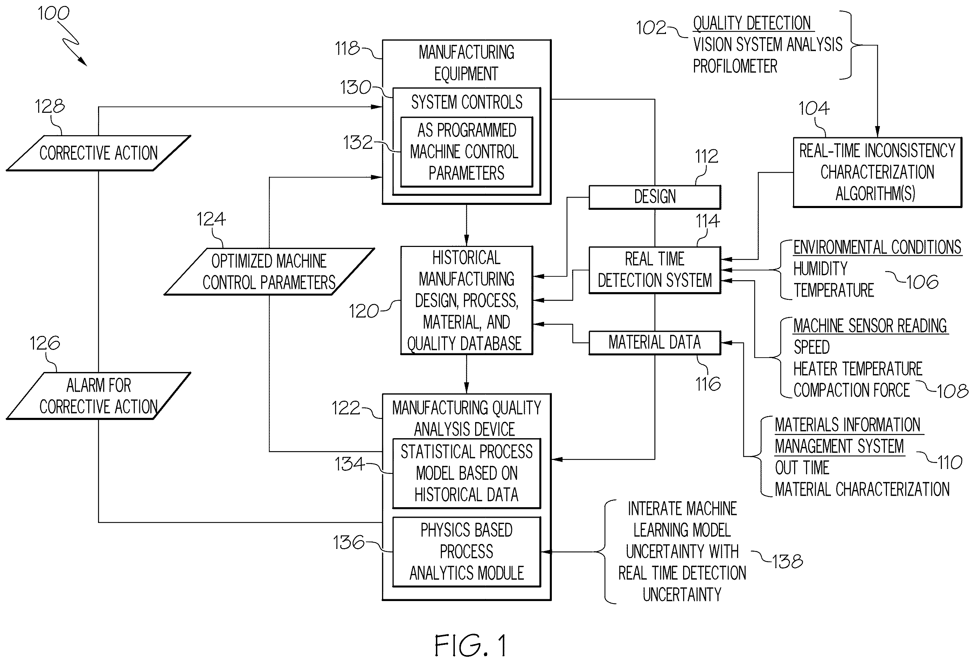

With reference to Fig. 1, in one or more examples an automated system 100 for analysis and process control during fabrication of a workpiece 1602 includes quality detection 102, at least one real-time inconsistency characterization algorithm 104, environmental conditions 106, a machine sensor reading 108, a materials information management system 110, a design 112, a real-time detection system 114, material data 116, manufacturing equipment 118, a historical manufacturing design, process, material and quality database 120, a manufacturing quality analysis device 122, optimized machine control parameters 124, an alarm for corrective action 126 and a corrective action 128.

The quality detection 102 is in operative communication with the at least one real-time inconsistency characterization algorithm 104. The quality detection 102, for example, includes a vision system analysis and a profilometer. The at least one real-time inconsistency characterization algorithm 104, the environmental conditions 106 and the machine sensor reading 108 are in operative communication with the real-time detection system 114. The environmental conditions 106, for example, include humidity and temperature. The machine sensor reading 108, for example, includes speed, heater temperature and compaction force. The materials information management system 110 is in operative communication with the material data 116. The materials information management system 110, for example, includes out time and material characterization. The design 112, the real-time detection system 114, the material data 116 and the manufacturing equipment 118 are in operative communication with the historical manufacturing design, process, material and quality database 120 and the manufacturing quality analysis device 122.

The manufacturing equipment 118, for example, includes system controls 130 with as programmed machine control parameters 132. The historical manufacturing design, process, material and quality database 120 is in operative communication with the manufacturing quality analysis device 122. The manufacturing quality analysis device 122 is in operative communication with the manufacturing equipment 118, the optimized machine control parameters 124 and the alarm for corrective action 126. The manufacturing quality analysis device 122, for example, includes a statistical process model 134 based on historical data, a physics-based process analytics model 136 and a process optimization model 138. The process optimization model 138 integrates machine learning model uncertainty with real-time detection uncertainty 139. The optimized machine control parameters 124 are in operative communication with the manufacturing equipment 118. The alarm for corrective action 126 is in operative communication with the corrective action 128. The corrective action 128 is in operative communication with the manufacturing equipment 118.

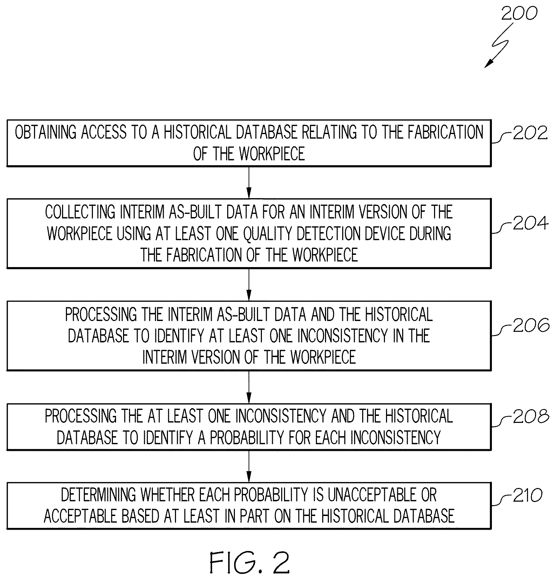

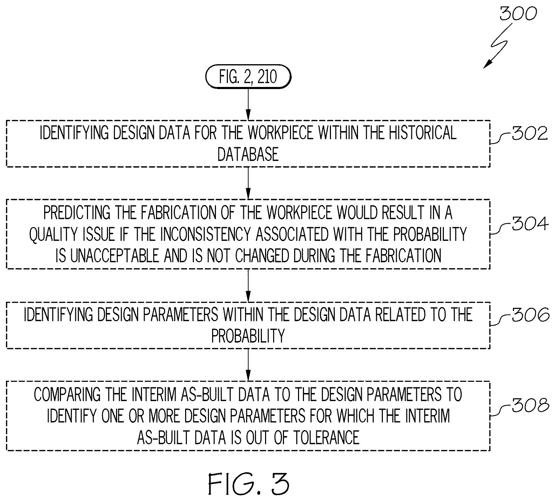

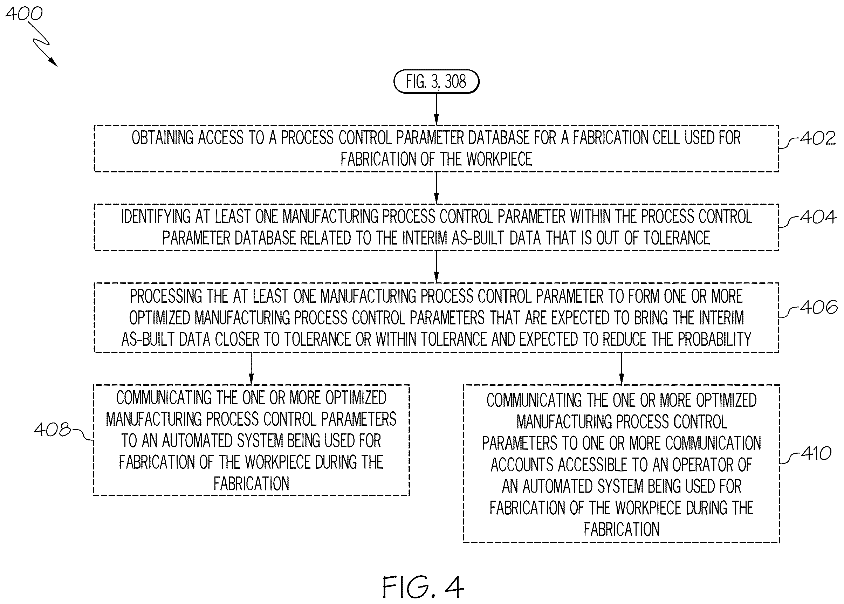

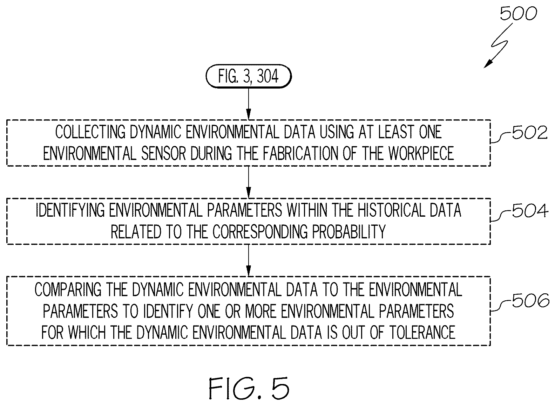

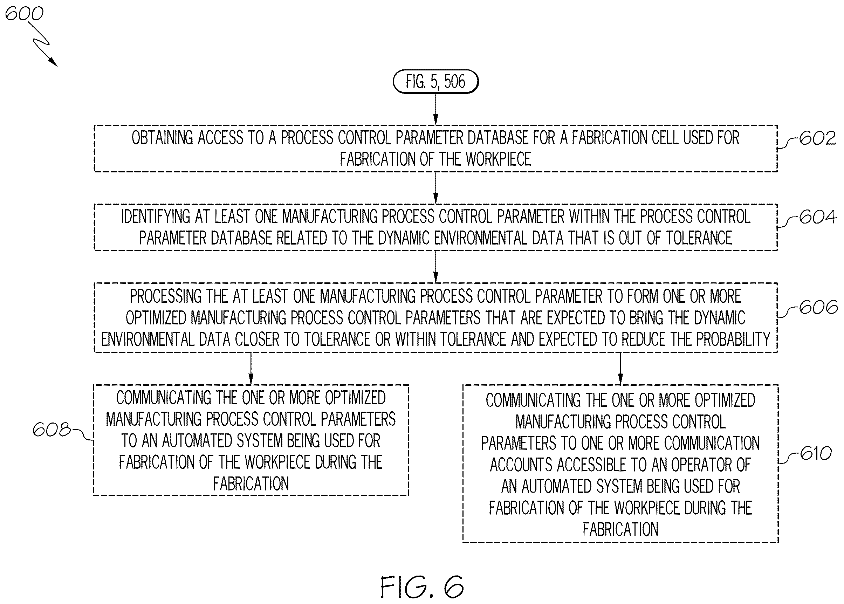

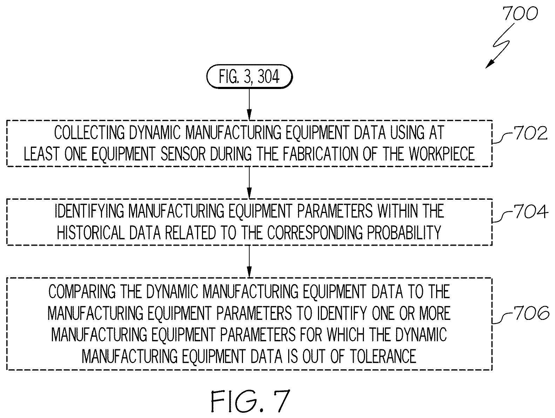

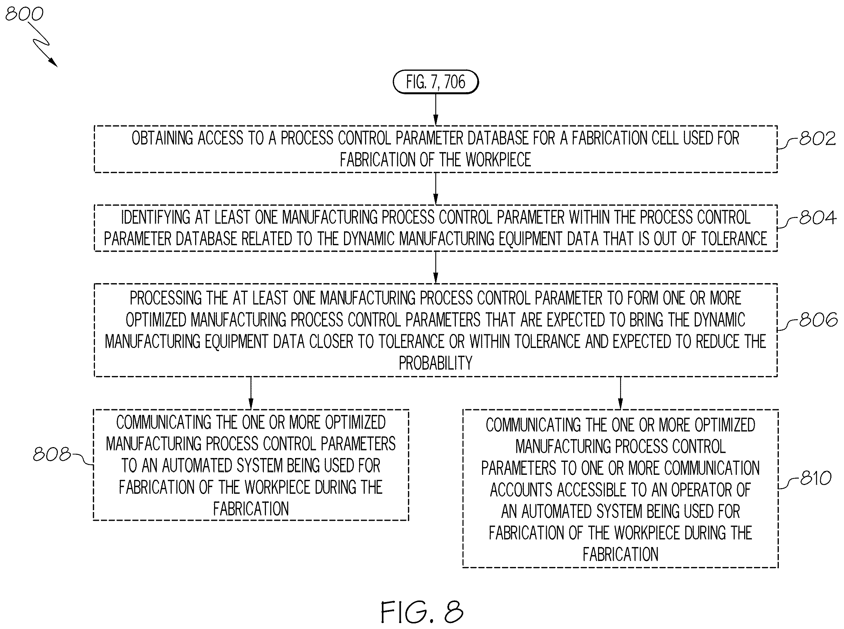

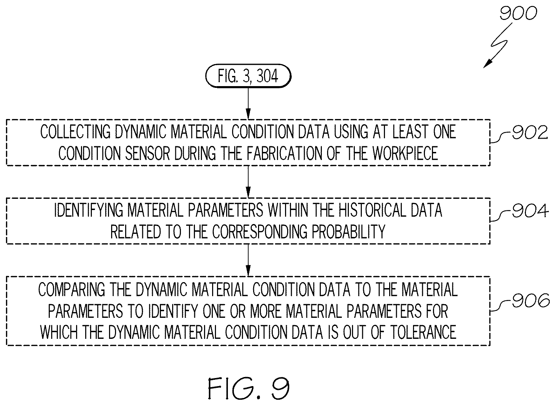

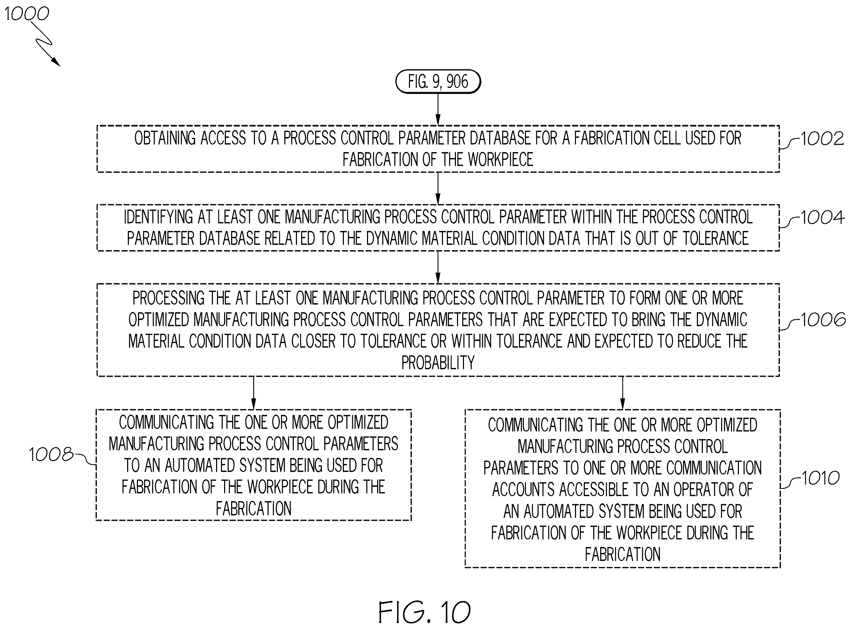

Referring generally to Figs 2-10, 16, 23-27, 28A-B, 29, 31, 33A-B, 36, 38, 39 and 41-43, by way of examples, the present disclosure is directed to methods 200, 300, 400, 500, 600, 700, 800, 900, 1000 for analysis and process control during fabrication of workpieces 1602. Fig. 2 provides an example of the method 200 for analysis and process control during fabrication of a workpiece 1602. Fig. 3, in combination with Fig. 2, provides an example of the method 300 for analysis and process control during fabrication of a workpiece 1602. Fig. 4, in combination with Figs. 2 and 3, provides an example of the method 400 for analysis and process control during fabrication of a workpiece 1602. Fig. 5, in combination with Figs. 2 and 3, provides an example of the method 500 for analysis and process control during fabrication of a workpiece 1602. Fig. 6, in combination with Figs. 2, 3 and 5, provides an example of the method 600 for analysis and process control during fabrication of a workpiece 1602. Fig. 7, in combination with Figs. 2 and 3, provides an example of the method 700 for analysis and process control during fabrication of a workpiece 1602. Fig. 8, in combination with Figs. 2, 3 and 7, provides an example of the method 800 for analysis and process control during fabrication of a workpiece 1602. Fig. 9, in combination with Figs. 2 and 3, provides an example of the method 900 for analysis and process control during fabrication of a workpiece 1602. Fig. 10, in combination with Figs. 2, 3 and 9, provides an example of the method 1000 for analysis and process control during fabrication of a workpiece 1602.

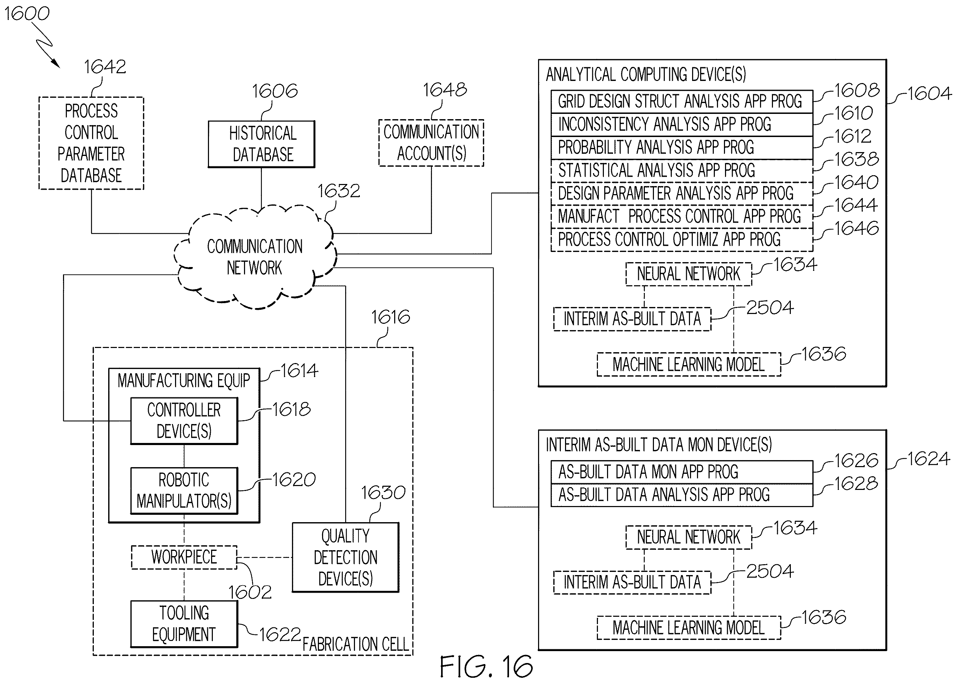

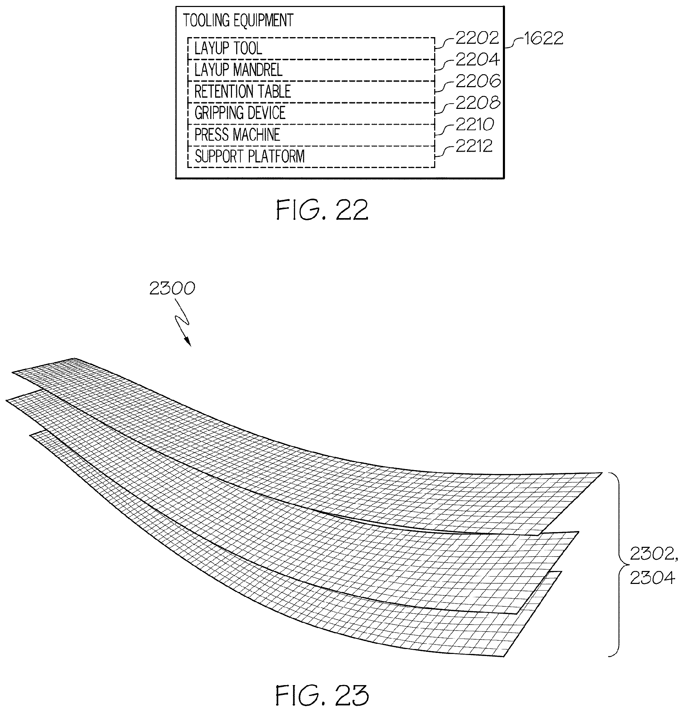

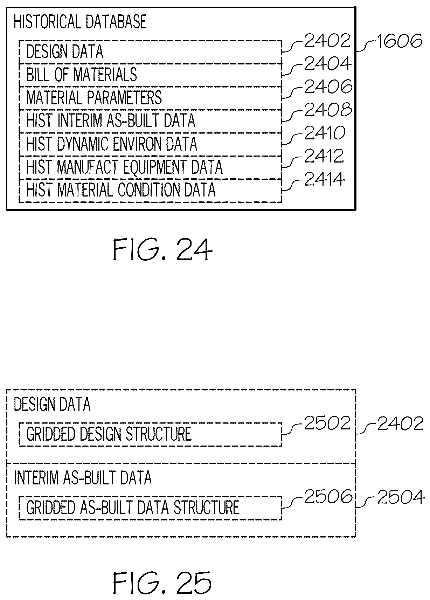

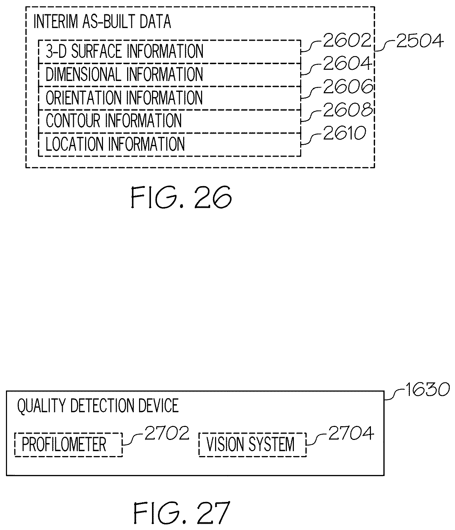

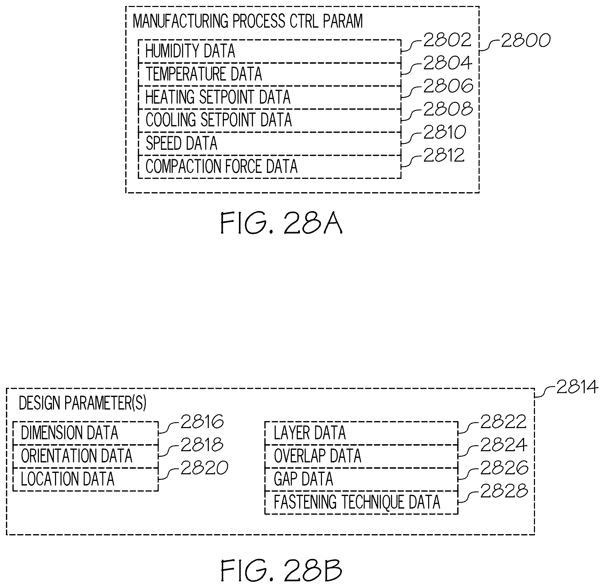

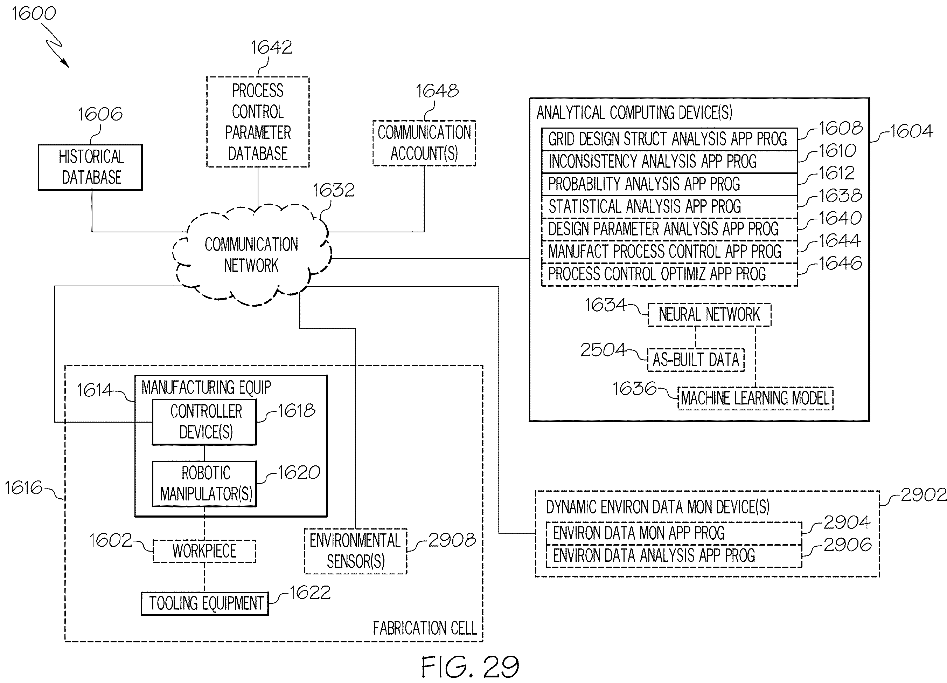

Fig. 16 is a functional block diagram of an example of an automated system 1600 for analysis and process control during fabrication of a workpiece 1602. Fig. 23 is an exploded functional view of an example of a composite workpiece 2300 for the automated system 1600 of Fig. 16. Fig. 24 is a block diagram showing examples of data stored in a historical database 1606 for the automated system 1600 of Fig. 16. Fig. 25 is a block diagram showing examples of design data 2402 and interim as-built data 2504 for the automated system 1600 of Fig. 16. Fig. 26 is a block diagram showing additional examples of interim as-built data 2504 for the automated system 1600 of Fig. 16. Fig. 27 is a block diagram showing examples of a quality detection device 1630 for the automated system 1600 of Fig. 16. Fig. 28A is a block diagram showing examples of a manufacturing process control parameter 2800 for the automated system 1600 of Fig. 16. Fig. 28B is a block diagram showing examples of a design parameter 2814 for the automated system 1600 of Fig. 16. Fig. 29 is a functional block diagram of another example of an automated system 1600 for analysis and process control during fabrication of a workpiece 1602.

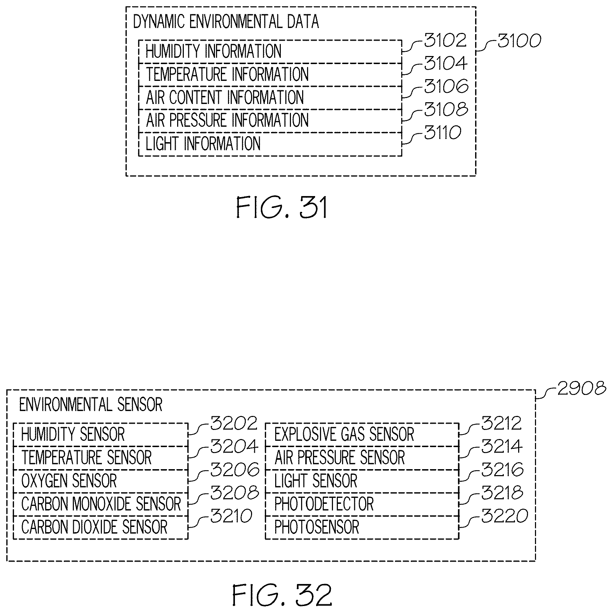

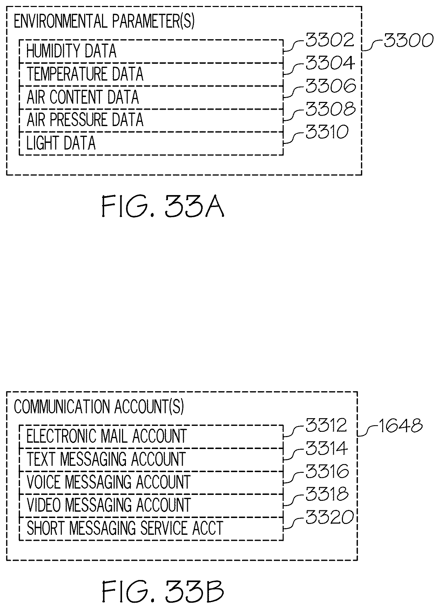

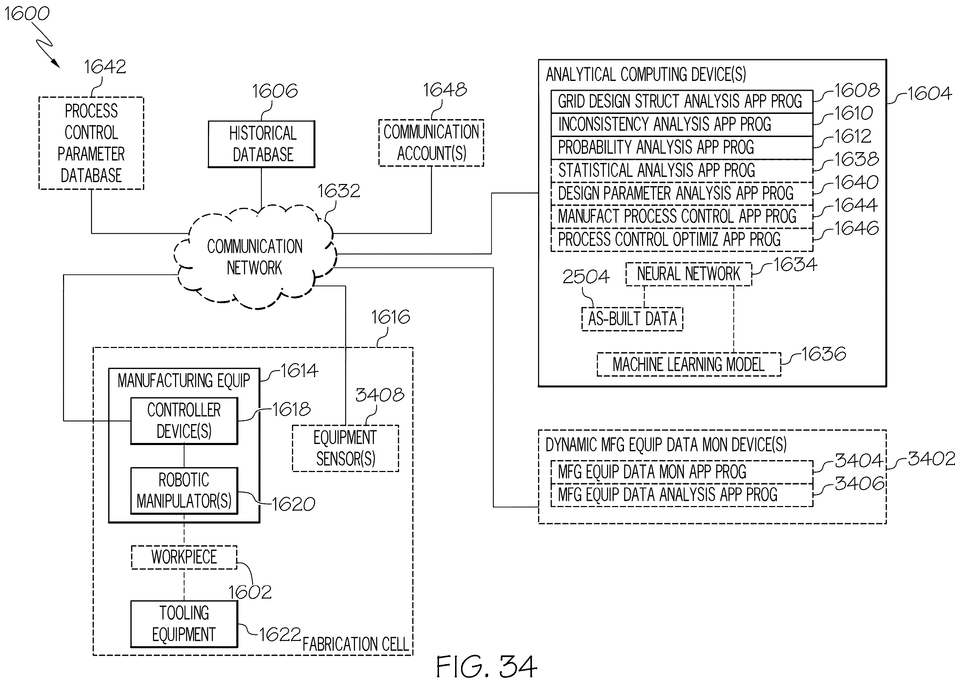

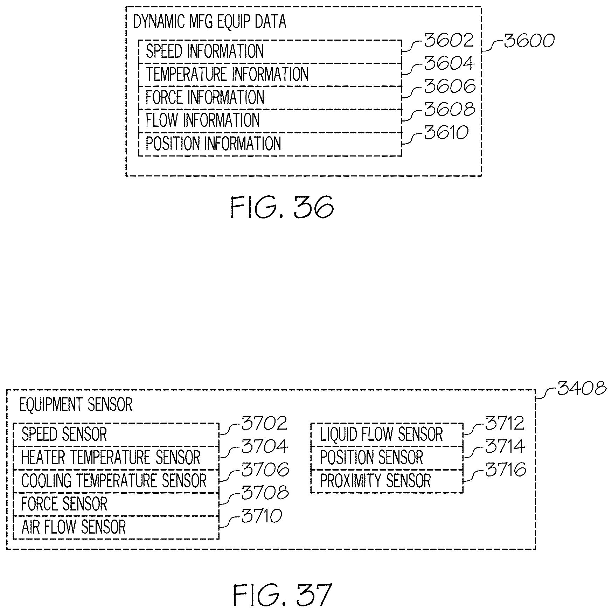

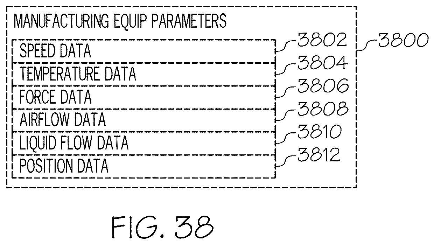

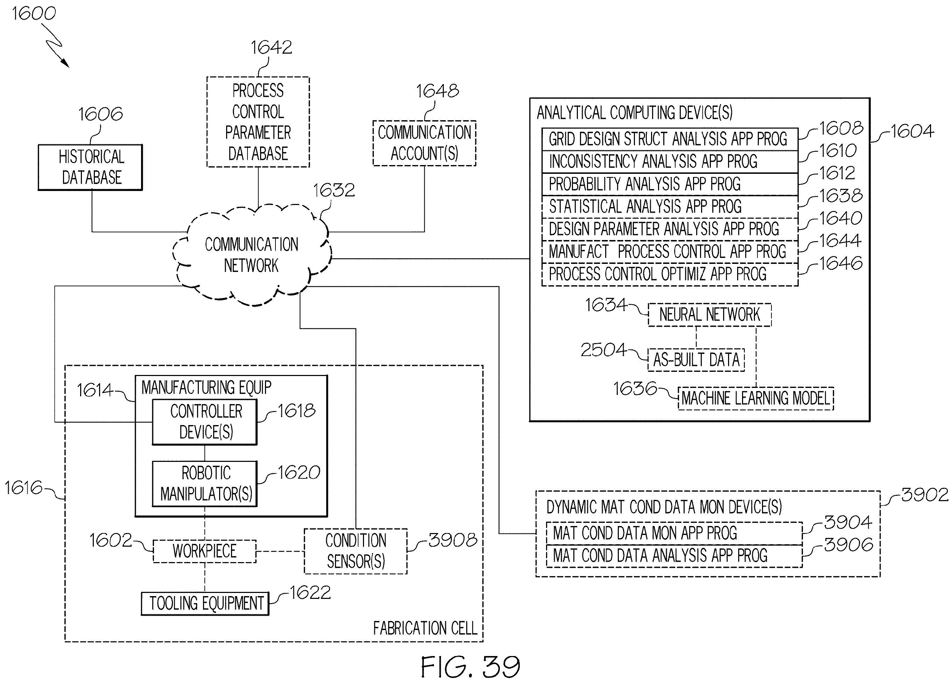

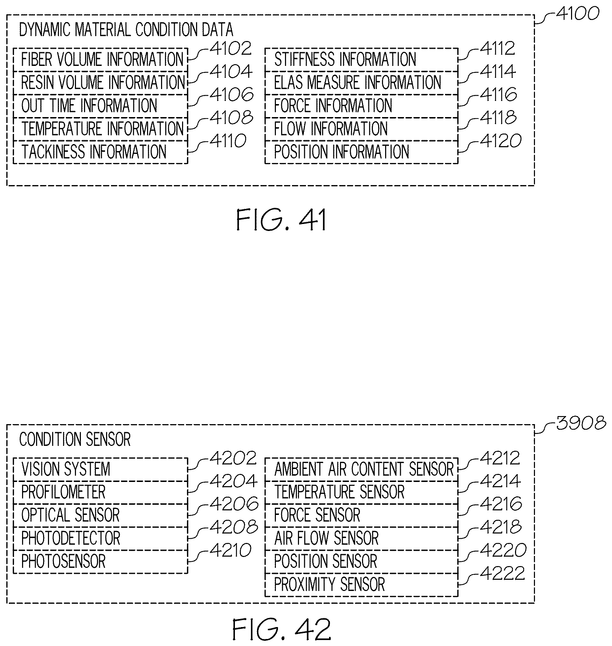

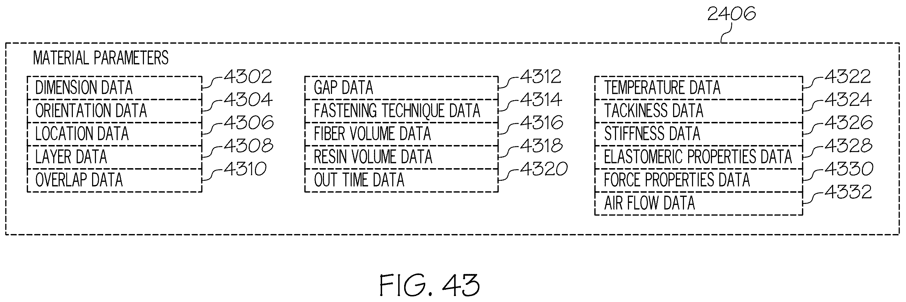

Fig. 31 is a block diagram showing examples of dynamic environmental data 3100 for the automated system 1600 of Fig. 29. Fig. 33A is a block diagram showing examples of an environmental parameter 3300 for the automated system of Fig. 29. Fig. 33B is a block diagram showing examples of a communication account 1648 for the automated systems 1600 of Fig. 16, Fig. 29, Fig. 34 and Fig. 39. Fig. 36 is a block diagram showing examples of dynamic manufacturing equipment data 3600 for the automated system 1600 of Fig. 34. Fig. 38 is a block diagram showing examples of a manufacturing equipment parameter 3800 for the automated system 1600 of Fig. 29. Fig. 39 is a functional block diagram of still another example of an automated system 1600 for analysis and process control during fabrication of a workpiece 1602. Fig. 41 is a block diagram showing examples of dynamic material condition data 4100 for the automated system 1600 of Fig. 39. Fig. 42 is a block diagram showing examples of a condition sensor 3908 for the automated system 1600 of Fig. 39. Fig. 43 is a block diagram showing examples of a material parameter 2406 for the automated system 1600 of Fig. 39.

With reference again to Figs. 2, 16 and 23-27, in one or more examples, a method 200 (see Fig. 2) for analysis and process control during fabrication of a workpiece 1602 includes obtaining 202 access to a historical database 1606 relating to the fabrication of the workpiece 1602. At 204, interim as-built data 2504 for an interim version of the workpiece 1602 is collected using at least one quality detection device 1630 during the fabrication of the workpiece 1602. At 206, the interim as-built data 2504 and the historical database 1606 are processed to identify at least one inconsistency in the interim version of the workpiece 1602. At 208, the at least one inconsistency and the historical database 1606 are processed to identify a probability for each inconsistency. At 210, the process determines whether each probability is unacceptable or acceptable based at least in part on the historical database 1606.

In some examples of the method 200, the workpiece 1602 includes a composite workpiece 2300. In some examples of the method 200, the fabrication of the workpiece 1602 includes laying up multiple layers 2302 of composite material 2304. In some examples of the method 200, the historical database 1606 includes design data 2402 for the workpiece 1602, a bill of materials 2404 for the workpiece 1602, material parameters 2406 associated with items in the bill of materials 2404, historical interim as-built data 2408 related to fabrication of the workpiece 1602, historical dynamic environmental data 2410 related to fabrication of the workpiece 1602, historical manufacturing equipment data 2412 related to fabrication of the workpiece 1602, historical material condition data 2414 related to fabrication of the workpiece 1602 or any other suitable type of data relating to fabrication of the workpiece in any suitable combination. In some examples, the design data 2402 for the workpiece 1602 is decomposed into a gridded design structure 2502 for registering with the interim as-built data 2504 and the historical interim as-built data 2408. In some examples of the method 200, the interim as-built data 2504 for the workpiece 1602 is decomposed into a gridded as-built data structure 2506 for registering with design data 2402 for the workpiece 1602. In some examples of the method 200, the interim as-built data 2504 includes three-dimensional surface information 2602, dimensional information 2604, orientation information 2606, contour information 2608, locational information 2610 in relation to a gridded as-built data structure 2506 for one or more interim versions of the workpiece 1602 or any other suitable type of information in any suitable combination.

In some examples of the method 200, the at least one quality detection device 1630 includes a profilometer 2702, a vision system 2704 or any other suitable quality detection device in any suitable combination. In some examples of the method 200, at least one of the processing of the interim as-built data 2504, the processing of the at least one inconsistency and the determining whether each probability is unacceptable or acceptable is performed using a neural network 1634 in operative communication with the historical database 1606. In some examples, the neural network 1634 is configured to use the interim as-built data 2504 in conjunction with the historical database 1606 and a machine learning model 1636. In some examples of the method 200, the at least one inconsistency includes an unexpected characteristic of the workpiece 1602 during the fabrication of the workpiece 1602. In some examples of the method 200, the probability includes a statistical likelihood that the inconsistency identified during the fabrication of the workpiece 1602 will result in a quality issue. In yet another example of the method 200, the probability is deemed unacceptable when the probability exceeds a predetermined threshold.

With reference again to Figs. 2, 3, 16, 24, 25 and 28A-B, in one or more examples, a method 300 (see Fig. 3) for analysis and process control during fabrication of a workpiece 1602 includes the method 200 of Fig. 2 and continues from 210 to 302 for each probability that is unacceptable. At 302, design data 2402 for the workpiece 1602 is identified within the historical database 1606. At 304, the process predicts the fabrication of the workpiece 1602 would result in a quality issue if the inconsistency associated with the probability is unacceptable and is not changed during the fabrication.

In some examples, for each probability that is unacceptable, the method 300 also includes identifying 306 design parameters 2814 within the design data 2402 related to the probability. At 308, the interim as-built data 2504 is compared to the design parameters 2814 to identify one or more design parameters 2814 for which the interim as-built data 2504 is out of tolerance.

In some examples of the method 300, at least one of the predicting of the quality issue and the comparing of the interim as-built data 2504 is performed using a neural network 1634 in operative communication with the historical database 1606. In some examples, the neural network 1634 is configured to use the interim as-built data 2504 in conjunction with the historical database 1606 and a machine learning model 1636.

In some examples of the method 300, the design parameters 2814 include dimension data 2816, orientation data 2818, location data 2820 in relation to a gridded as-built data structure 2506, layer data 2822, overlap data 2824, gap data 2826 between adjacent materials, fastening technique data 2828 between adjacent materials or any other suitable design parameters in any suitable combination.

With reference again to Figs. 2, 3, 4, 16, 25, 28A-B and 33A-B, in one or more examples, a method 400 (see Fig. 4) for analysis and process control during fabrication of a workpiece 1602 includes the method 200 of Fig. 2, the method 300 of Fig. 3 and continues from 308 of Fig. 3 to 402 for each design parameter 2814 for which the interim as-built data 2504 is out of tolerance. At 402, access is obtained to a process control parameter database 1642 for a fabrication cell 1616 used for fabrication of the workpiece 1602. At 404, at least one manufacturing process control parameter 2800 is identified within the process control parameter database 1642 related to the interim as-built data 2504 that is out of tolerance. At 406, the at least one manufacturing process control parameter 2800 is processed to form one or more optimized manufacturing process control parameters that are expected to bring the interim as-built data 2504 closer to tolerance or within tolerance and expected to reduce the probability.

In some examples of the method 400, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 or any other suitable manufacturing process control parameter in any suitable combination. In some examples of the method 400, the identifying of at least one manufacturing process control parameter 2800 and the processing of the at least one manufacturing process control parameter 2800 are performed using a neural network 1634 in operative communication with the historical database 1606 and the process control parameter database 1642. In some examples, the neural network 1634 is configured to use the interim as-built data 2504 in conjunction with the historical database 1606 and a machine learning model 1636. In some examples, the method 400 also includes communicating 408 the one or more optimized manufacturing process control parameters to an automated system 1600 being used for fabrication of the workpiece 1602 during the fabrication.

In some examples, the method 400 also includes communicating 410 the one or more optimized manufacturing process control parameters to one or more communication accounts 1648 accessible to an operator of an automated system 1600 being used for fabrication of the workpiece 1602 during the fabrication. In some examples, the one or more communication accounts 1648 includes an electronic mail account 3312, a text messaging account 3314, a voice messaging account 3316, a video messaging account 3318, a short messaging service account 3320 or any other suitable communication account in any suitable combination.

With reference again to Figs. 2, 3, 5, 16, 29, 31 and 33A-B, in one or more examples, a method 500 (see Fig. 5) for analysis and process control during fabrication of a workpiece 1602 includes the method 200 of Fig. 2, the method 300 of Fig. 3 and continues from 304 of Fig. =3 to 502 for each probability that is unacceptable. At 502, dynamic environmental data 3100 is collected using at least one environmental sensor 2908 during the fabrication of the workpiece 1602. At 504, environmental parameters 3300 are identified within the historical database 1606 related to the corresponding probability. At 506, the dynamic environmental data 3100 is compared to the environmental parameters 3300 to identify one or more environmental parameters 3300 for which the dynamic environmental data 3100 is out of tolerance.

In some examples of the method 500, the dynamic environmental data 3100 includes humidity information 3102, temperature information 3104, air content information 3106, air pressure information 3108, light information 3110 or any other suitable dynamic environmental data in any suitable combination. In some examples of the method 500, the at least one environmental sensor 2908 includes a humidity sensor 3202, a temperature sensor 3204, an oxygen sensor 3206, a carbon monoxide sensor 3208, a carbon dioxide sensor 3210, an explosive gas sensor 3212, an air pressure sensor 3214, a light sensor 3216, a photodetector 3218, a photosensor 3220 or any other suitable environmental sensor in any suitable combination. In some examples of the method 500, the comparing of the dynamic environmental data 3100 is performed using a neural network 1634 in operative communication with the historical database 1606. In some examples , the neural network 1634 is configured to use the interim as-built data 2504 in conjunction with the historical database 1606 and a machine learning model 1636. In some examples of the method 500, the environmental parameters 3300 include humidity data 3302, temperature data 3304, air content data 3306, air pressure data 3308, light data 3310 or any other suitable environmental parameter in any suitable combination.

With reference again to Figs. 2, 3, 5, 6, 16, 25, 28A-B, 31 and 33A-B, in one or more examples, a method 600 (see Fig. 6) for analysis and process control during fabrication of a workpiece 1602 includes the method 200 of Fig. 2, the method 300 of Fig. 3, the method 500 of Fig. 5 and continues from 506 of Fig. 5 to 602 for each environmental parameter 3300 for which the dynamic environmental data 3100 is out of tolerance. At 602, access is obtained to a process control parameter database 1642 for a fabrication cell 1616 used for fabrication of the workpiece 1602. At 604, at least one manufacturing process control parameter 2800 is identified within the process control parameter database 1642 related to the dynamic environmental data 3100 that is out of tolerance. At 606, the at least one manufacturing process control parameter 2800 is processed to form one or more optimized manufacturing process control parameters that are expected to bring the dynamic environmental data 3100 closer to tolerance or within tolerance and expected to reduce the probability.

In some examples of the method 600, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 and any other suitable manufacturing process control parameter in any suitable combination. In some examples of the method 600, the identifying of at least one manufacturing process control parameter 2800 and the processing of the at least one manufacturing process control parameter 2800 are performed using a neural network 1634 in operative communication with the historical database 1606 and the process control parameter database 1642. In some examples, the neural network 1634 is configured to use the interim as-built data 2504 in conjunction with the historical database 1606 and a machine learning model 1636. In some examples, the method 600 also includes communicating 608 the one or more optimized manufacturing process control parameters to an automated system 1600 being used for fabrication of the workpiece 1602 during the fabrication. In some examples, the method 600 also includes communicating 610 the one or more optimized manufacturing process control parameters to one or more communication accounts 1648 accessible to an operator of an automated system 1600 being used for fabrication of the workpiece 1602 during the fabrication.

With reference again to Figs. 2, 3, 7, 16, 36 and 38, in one or more examples, a method 700 (see Fig. 7) for analysis and process control during fabrication of a workpiece 1602 includes the method 200 of Fig. 2, the method 300 of Fig. 3 and continues from 304 of Fig. 3 to 702 for each probability that is unacceptable. At 702, dynamic manufacturing equipment data 3600 is collected using at least one equipment sensor 3408 during the fabrication of the workpiece 1602. At 704, manufacturing equipment parameters 3800 are identified within the historical database 1606 related to the corresponding probability. At 706, the dynamic manufacturing equipment data 3600 is compared to the manufacturing equipment parameters 3800 to identify one or more manufacturing equipment parameters 3800 for which the dynamic manufacturing equipment data 3600 is out of tolerance.

In some examples of the method 700, the dynamic manufacturing equipment data 3600 includes speed information 3602 for one or more components of manufacturing equipment 1614, temperature information 3604 for one or more of heater equipment and cooling equipment, force information 3606 for compaction equipment, flow information 3608 for one or more of air ventilation components and liquid cooling equipment, position information 3610 for one or more components of manufacturing equipment 1614 or any other suitable dynamic manufacturing equipment data in any suitable combination. In some examples of the method 700, the at least one equipment sensor 3408 includes a speed sensor 3702, a heater temperature sensor 3704, a cooling temperature sensor 3706, a force sensor 3708, an air flow sensor 3710, a liquid flow sensor 3712, a position sensor 3714, a proximity sensor 3716 or any other suitable equipment sensor in any suitable combination. In some examples of the method 700, the comparing of the dynamic manufacturing equipment data 3600 is performed using a neural network 1634 in operative communication with the historical database 1606. In some examples, the neural network 1634 is configured to use the interim as-built data 2504 in conjunction with the historical database 1606 and a machine learning model 1636. In some examples of the method 700, the manufacturing equipment parameters 3800 include speed data 3802, speed data 3804, force data 3806, air flow data 3808, liquid flow data 3810, position data 3812 or any other suitable manufacturing equipment parameters in any suitable combination.

With reference again to Figs. 2, 3, 7, 8, 16, 28A-B, 36 and 38, in one or more examples, a method 800 (see Fig. 8) for analysis and process control during fabrication of a workpiece 1602 includes the method 200 of Fig. 2, the method 300 of Fig. 3, the method 700 of Fig. 7 and continues from 706 of Fig. 7 to 802 for each manufacturing equipment parameter 3800 for which the dynamic manufacturing equipment data 3600 is out of tolerance. At 802, access is obtained to a process control parameter database 1642 for a fabrication cell 1616 used for fabrication of the workpiece 1602. At 804, at least one manufacturing process control parameter 2800 is identified within the process control parameter database 1642 related to the dynamic manufacturing equipment data 3600 that is out of tolerance. At 806, the at least one manufacturing process control parameter 2800 is processed to form one or more optimized manufacturing process control parameters that are expected to bring the dynamic manufacturing equipment data 3600 closer to tolerance or within tolerance and expected to reduce the probability.

In some examples of the method 800, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 or any other suitable manufacturing process control parameter in any suitable combination. In some examples of the method 800, the identifying of at least one manufacturing process control parameter 2800 and the processing of the at least one manufacturing process control parameter 2800 are performed using a neural network 1634 in operative communication with the historical database 1606 and the process control parameter database 1642. In some examples, the neural network 1634 is configured to use the interim as-built data 2504 in conjunction with the historical database 1606 and a machine learning model 1636. In some examples, the method 800 also includes communicating 808 the one or more optimized manufacturing process control parameters to an automated system 1600 being used for fabrication of the workpiece 1602 during the fabrication. In some examples, the method 800 also includes communicating 810 the one or more optimized manufacturing process control parameters to one or more communication accounts 1648 accessible to an operator of an automated system 1600 being used for fabrication of the workpiece 1602 during the fabrication.

With reference again to Figs. 2, 3, 9, 16, 24, 25, 39 and 41-43, in one or more examples, a method 900 (see Fig. 9) for analysis and process control during fabrication of a workpiece 1602 includes the method 200 of Fig. 2, the method 300 of Fig. 3 and continues from 304 of Fig. 3 to 902 for each probability that is unacceptable. At 902, dynamic material condition data 4100 is collected using at least one condition sensor 3908 during the fabrication of the workpiece 1602. At 904, material parameters 2406 are identified within the historical database 1606 related to the corresponding probability. At 906, the dynamic material condition data 4100 is compared to the material parameters 2406 to identify one or more material parameters 2406 for which the dynamic material condition data 4100 is out of tolerance.

In some examples of the method 900, the dynamic material condition data 4100 includes fiber volume information 4102, resin volume information 4104, out time information 4106, temperature information 4108, tackiness information 4110, stiffness information 4112, elastomeric measurement information 4114, force information 4116, flow information 4118, position information 4120 or any other suitable dynamic material condition data in any suitable combination. In some examples of the method 900, the at least one condition sensor 3908 includes a vision system 4202, a profilometer 4204, an optical sensor 4206, a photodetector 4208, a photosensor 4210, an ambient air content sensor 4212, a temperature sensor 4214, a force sensor 4216, an air flow sensor 4218, a position sensor 4220, a proximity sensor 4222 or any other suitable condition sensor in any suitable combination. In some examples of the method 900, the comparing of the dynamic material condition data 4100 is performed using a neural network 1634 in operative communication with the historical database 1606. In some examples, the neural network 1634 is configured to use the interim as-built data 2504 in conjunction with the historical database 1606 and a machine learning model 1636. In some examples of the method 900, the material parameters 2406 include dimension data 4302, orientation data 4304, location data 4306 in relation to a gridded as-built data structure 2506, layer data 4308, overlap data 4310, gap data 4312, fastening technique data 4314 between adjacent materials, fiber volume data 4316, resin volume data 4318, out time data 4320, temperature data 4322, tackiness data 4324, stiffness data 4326, elastomeric properties data 4328, force properties data 4330, air flow data 4332 or any other suitable material parameter in any suitable combination.

With reference again to Figs. 2, 3, 9, 10, 16, 25, 28A-B and 41, in one or more examples, a method 1000 (see Fig. 10) for analysis and process control during fabrication of a workpiece 1602 includes the method 200 of Fig. 2, the method 300 of Fig. 3, the method 900 of Fig. 9 and continues from 906 of Fig. 7 to 1002 for each material parameter 2406 for which the dynamic material condition data 4100 is out of tolerance. At 1002, access is obtained to a process control parameter database 1642 for a fabrication cell 1616 used for fabrication of the workpiece 1602. At 1004, at least one manufacturing process control parameter 2800 is identified within the process control parameter database 1642 related to the dynamic material condition data 4100 that is out of tolerance. At 1006, the at least one manufacturing process control parameter 2800 is processed to form one or more optimized manufacturing process control parameters that are expected to bring the dynamic material condition data 4100 closer to tolerance or within tolerance and expected to reduce the probability.

In some examples of the method 1000, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 or any other suitable manufacturing process control parameter in any suitable combination. In some examples of the method 1000, the identifying of at least one manufacturing process control parameter 2800 and the processing of the at least one manufacturing process control parameter 2800 are performed using a neural network 1634 in operative communication with the historical database 1606 and the process control parameter database 1642. In some examples, the neural network 1634 is configured to use the interim as-built data 2504 in conjunction with the historical database 1606 and a machine learning model 1636. In some examples, the method 1000 also includes communicating 1008 the one or more optimized manufacturing process control parameters to an automated system 1600 being used for fabrication of the workpiece 1602 during the fabrication. In some examples, the method 1000 also includes communicating 1010 the one or more optimized manufacturing process control parameters to one or more communication accounts 1648 accessible to an operator of an automated system 1600 being used for fabrication of the workpiece 1602 during the fabrication.

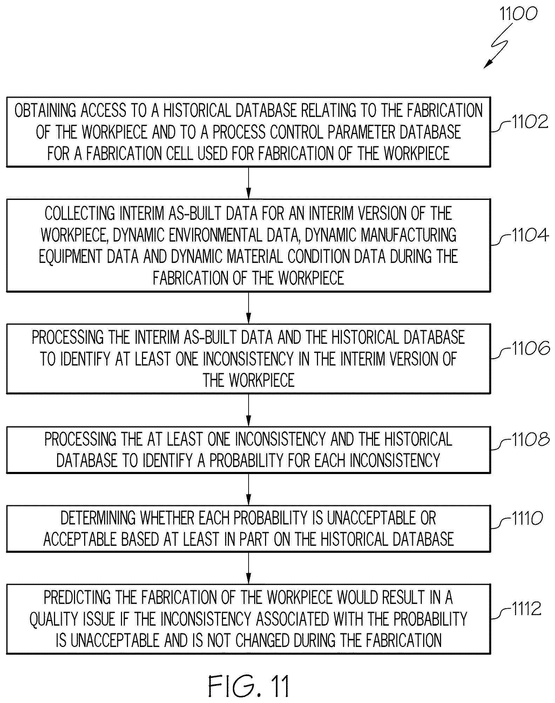

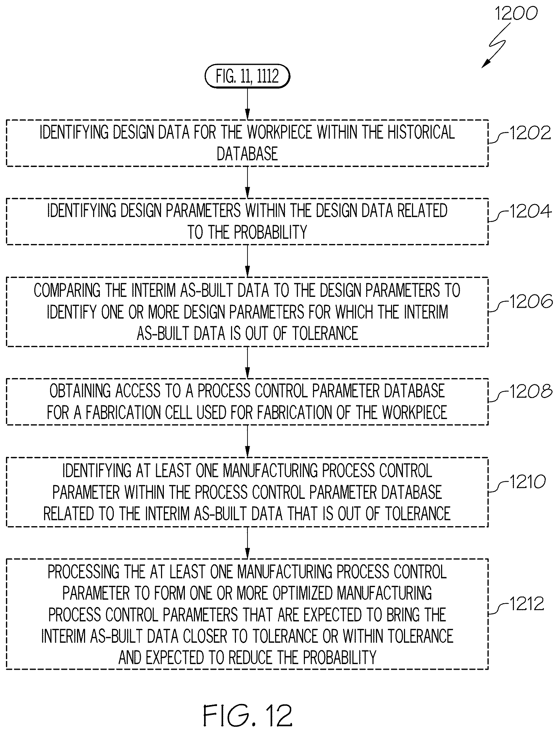

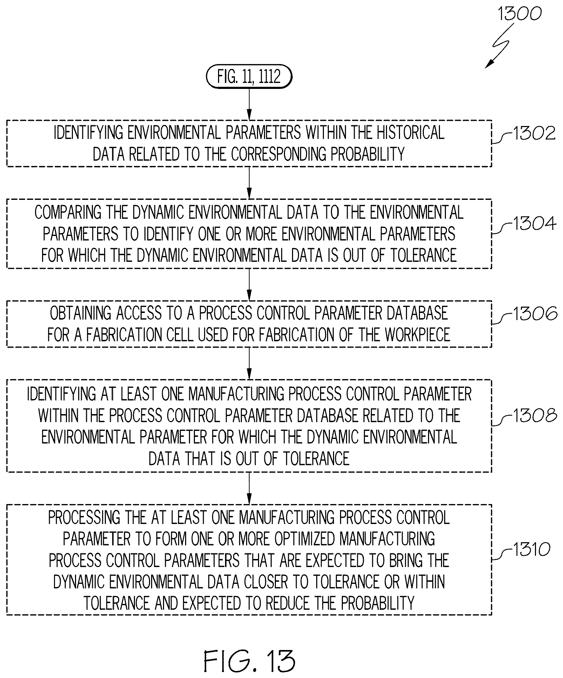

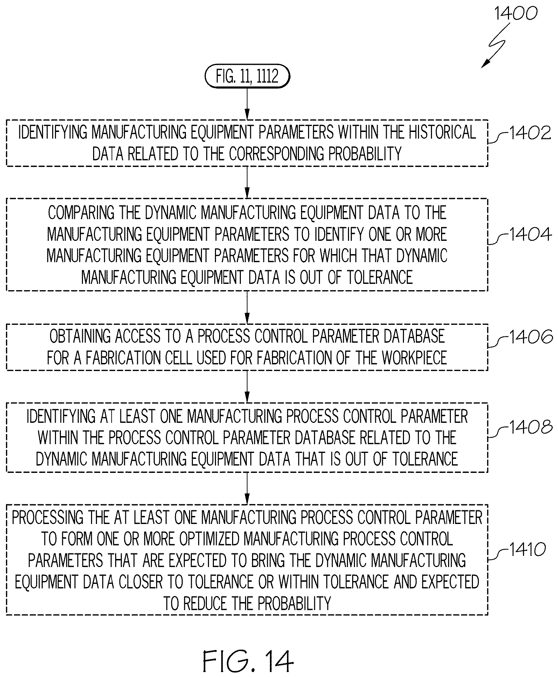

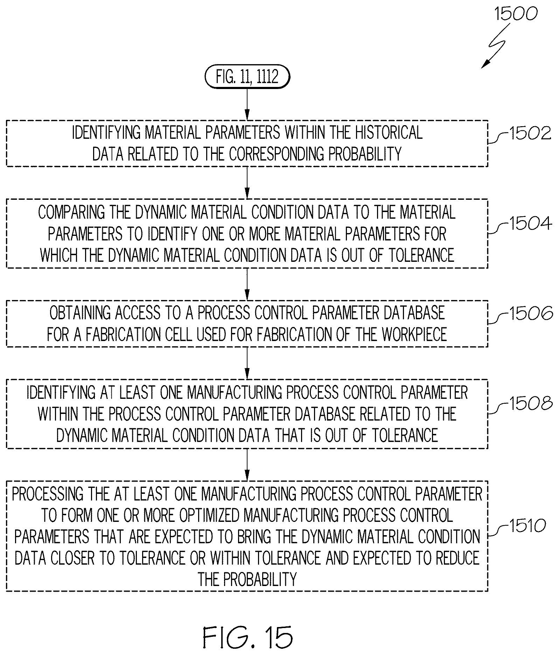

Referring generally to Figs 11-16, 24, 25, 28A-B, 31, 33A-B, 36, 38 and 41, by way of examples, the present disclosure is directed to methods 1100, 1200, 1300, 1400, 1500 for analysis and process control during fabrication of workpieces 1602. Fig. 11 provides an example of the method 1100 for analysis and process control during fabrication of a workpiece 1602. Fig. 12, in combination with Fig. 11, provides an example of the method 1200 for analysis and process control during fabrication of a workpiece 1602. Fig. 13, in combination with Fig. 11, provides an example of the method 1300 for analysis and process control during fabrication of a workpiece 1602. Fig. 14, in combination with Figs. 11, provides an example of the method 1400 for analysis and process control during fabrication of a workpiece 1602. Fig. 15, in combination with Fig. 11, provides an example of the method 1500 for analysis and process control during fabrication of a workpiece 1602. Fig. 16 is a functional block diagram of an example of an automated system 1600 for analysis and process control during fabrication of a workpiece 1602.

Fig. 24 is a block diagram showing examples of data stored in a historical database 1606 for the automated system 1600 of Fig. 16. Fig. 25 is a block diagram showing examples of design data 2402 and interim as-built data 2504 for the automated system 1600 of Fig. 16. Fig. 28A is a block diagram showing examples of a manufacturing process control parameter 2800 for the automated system 1600 of Fig. 16. Fig. 28B is a block diagram showing examples of a design parameter 2814 for the automated system 1600 of Fig. 16. Fig. 31 is a block diagram showing examples of dynamic environmental data 3100 for the automated system 1600 of Fig. 29. Fig. 33A is a block diagram showing examples of an environmental parameter 3300 for the automated system of Fig. 29. Fig. 33B is a block diagram showing examples of a communication account 1648 for the automated systems 1600 of Fig. 16, Fig. 29, Fig. 34 and Fig. 39. Fig. 36 is a block diagram showing examples of dynamic manufacturing equipment data 3600 for the automated system 1600 of Fig. 34. Fig. 38 is a block diagram showing examples of a manufacturing equipment parameter 3800 for the automated system 1600 of Fig. 29. Fig. 41 is a block diagram showing examples of dynamic material condition data 4100 for the automated system 1600 of Fig. 39.

With reference again to Figs. 11, 16, 25, 36 and 41, in one or more examples, a method 1100 (see Fig. 11) for analysis and process control during fabrication of a workpiece 1602 includes obtaining 1102 access to a historical database 1606 relating to the fabrication of the workpiece 1602 and to a process control parameter database 1642 for a fabrication cell 1616 used for fabrication of the workpiece 1602. At 1104, interim as-built data 2504 for an interim version of the workpiece 1602, dynamic environmental data 3100, dynamic manufacturing equipment data 3600 and dynamic material condition data 4100 is collected during the fabrication of the workpiece 1602. At 1106, the interim as-built data 2504 and the historical database 1606 is processed to identify at least one inconsistency in the interim version of the workpiece 1602. At 1108, the at least one inconsistency and the historical database 1606 is processed to identify a probability for each inconsistency. At 1110, the process determines whether each probability is unacceptable or acceptable based at least in part on the historical database 1606. At 1112, the process predicts the fabrication of the workpiece 1602 would result in a quality issue if the inconsistency associated with the probability is unacceptable and is not changed during the fabrication. In some examples of the method 1100, the interim as-built data 2504 is collected using at least one quality detection device 1630. In some examples of the method 1100, the dynamic environmental data 3100 is collected using at least one environmental sensor 2908. In some examples of the method 1100, the dynamic manufacturing equipment data 3600 is collected using at least one equipment sensor 3408. In some examples of the method 1100, the dynamic material condition data 4100 is collected using at least one condition sensor 3908.

With reference again to Figs. 11, 12, 16, 24, 25 and 28A-B, in one or more examples, a method 1200 (see Fig. 12) for analysis and process control during fabrication of a workpiece 1602 includes the method 1100 of Fig. 11 and continues from 1112 to 1202 for each probability that is unacceptable. At 1202, design data 2402 for the workpiece 1602 is identified within the historical database 1606. At 1204, design parameters 2814 are identified within the design data 2402 related to the probability. At 1206, the interim as-built data 2504 is compared to the design parameters 2814 to identify one or more design parameters 2814 for which the interim as-built data 2504 is out of tolerance. In some examples, for each design parameter 2814 for which the interim as-built data 2504 is out of tolerance, the method 1200 also includes obtaining 1208 access to a process control parameter database 1642 for a fabrication cell 1616 used for fabrication of the workpiece 1602. At 1210, at least one manufacturing process control parameter 2800 is identified within the process control parameter database 1642 related to the interim as-built data 2504 that is out of tolerance. At 1212, the at least one manufacturing process control parameter 2800 is processed to form one or more optimized manufacturing process control parameters that are expected to bring the interim as-built data 2504 closer to tolerance or within tolerance and expected to reduce the probability.

With reference again to Figs. 11, 13, 16, 28A-B and 33A-B, in one or more examples, a method 1300 (see Fig. 13) for analysis and process control during fabrication of a workpiece 1602 includes the method 1100 of Fig. 11 and continues from 1112 to 1302 for each probability that is unacceptable. At 1302, environmental parameters 3300 are identified within the historical database 1606 related to the corresponding probability. At 1304, the dynamic environmental data 3100 is compared to the environmental parameters 3300 to identify one or more environmental parameters 3300 for which the dynamic environmental data 3100 is out of tolerance. In some examples, for each environmental parameter 3300 for which the dynamic environmental data 3100 is out of tolerance, the method 1300 also includes obtaining 1306 access to a process control parameter database 1642 for a fabrication cell 1616 used for fabrication of the workpiece 1602. At 1308, at least one manufacturing process control parameter 2800 is identified within the process control parameter database 1642 related to the environmental parameter for which the dynamic environmental data 3100 that is out of tolerance. At 1310, the at least one manufacturing process control parameter 2800 is processed to form one or more optimized manufacturing process control parameters that are expected to bring the dynamic environmental data 3100 closer to tolerance or within tolerance and expected to reduce the probability.

With reference again to Figs. 11, 14, 16, 36 and 38, in one or more examples, a method 1400 (see Fig. 14) for analysis and process control during fabrication of a workpiece 1602 includes the method 1100 of Fig. 11 and continues from 1112 to 1402 for each probability that is unacceptable. At 1402, manufacturing equipment parameters 3800 are identified within the historical database 1606 related to the corresponding probability. At 1404, the dynamic manufacturing equipment data 3600 is compared to the manufacturing equipment parameters 3800 to identify one or more manufacturing equipment parameters 3800 for which that dynamic manufacturing equipment data 3600 is out of tolerance. In some examples, for each manufacturing equipment parameter 3800 for which that dynamic manufacturing equipment data 3600 is out of tolerance, the method 1400 also includes obtaining 1406 access to a process control parameter database 1642 for a fabrication cell 1616 used for fabrication of the workpiece 1602. At 1408, at least one manufacturing process control parameter 2800 is identified within the process control parameter database 1642 related to the dynamic manufacturing equipment data 3600 that is out of tolerance. At 1410, the at least one manufacturing process control parameter 2800 is processed to form one or more optimized manufacturing process control parameters that are expected to bring the dynamic manufacturing equipment data 3600 closer to tolerance or within tolerance and expected to reduce the probability.

With reference again to Figs. 11, 14, 16, 36 and 38, in one or more examples, a method 1400 (see Fig. 14) for analysis and process control during fabrication of a workpiece 1602 includes the method 1100 of Fig. 11 and continues from 1112 to 1402 for each probability that is unacceptable. At 1502, material parameters 2406 are identified within the historical database 1606 related to the corresponding probability. At 1504, the dynamic material condition data 4100 is compared to the material parameters 2406 to identify one or more material parameters 2406 for which the dynamic material condition data 4100 is out of tolerance. In some examples, for each material parameter 2406 for which the dynamic material condition data 4100 is out of tolerance, the method 1400 also includes obtaining 1506 access to a process control parameter database 1642 for a fabrication cell 1616 used for fabrication of the workpiece 1602. At 1508, at least one manufacturing process control parameter 2800 is identified within the process control parameter database 1642 related to the dynamic material condition data 4100 that is out of tolerance. At 1510, the at least one manufacturing process control parameter 2800 is processed to form one or more optimized manufacturing process control parameters that are expected to bring the dynamic material condition data 4100 closer to tolerance or within tolerance and expected to reduce the probability.

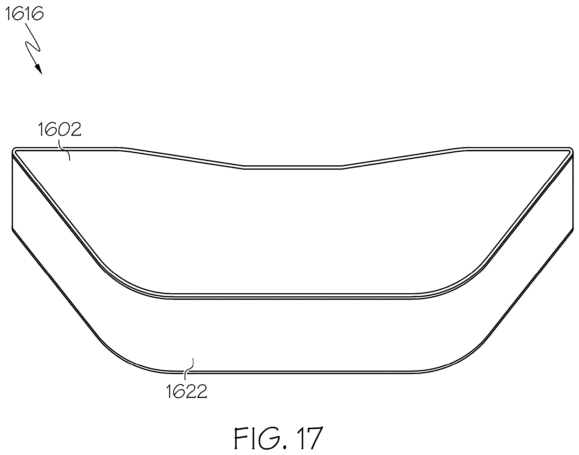

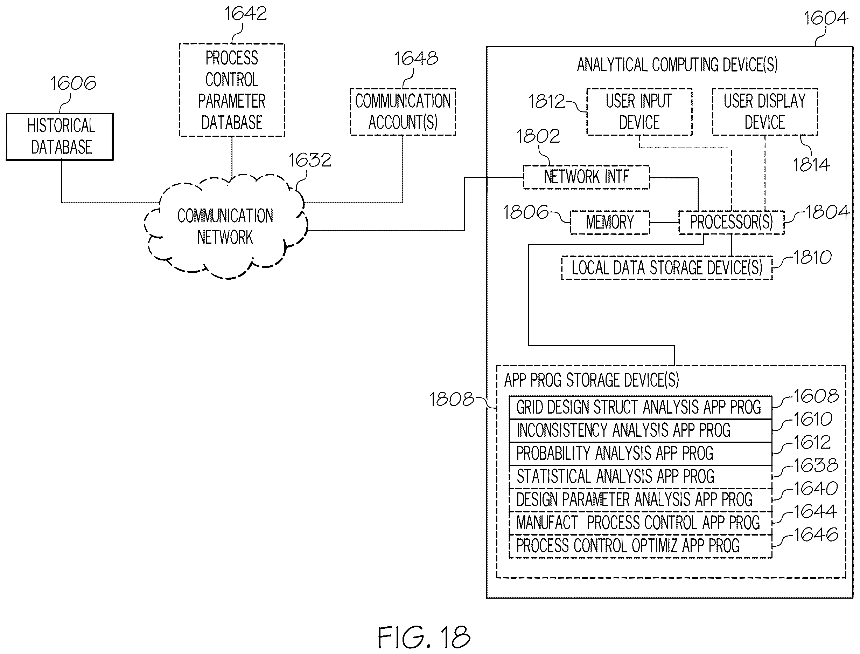

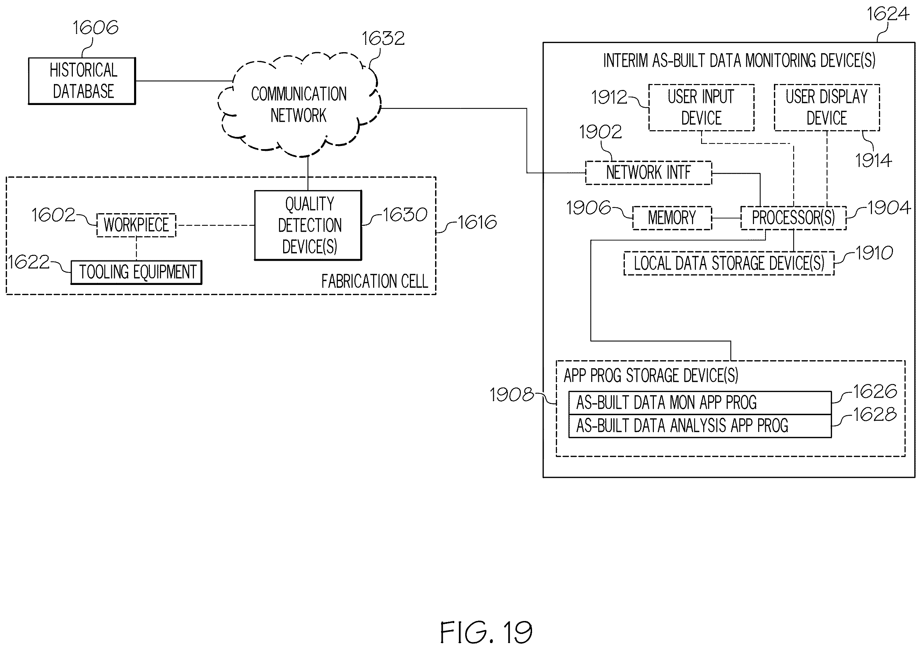

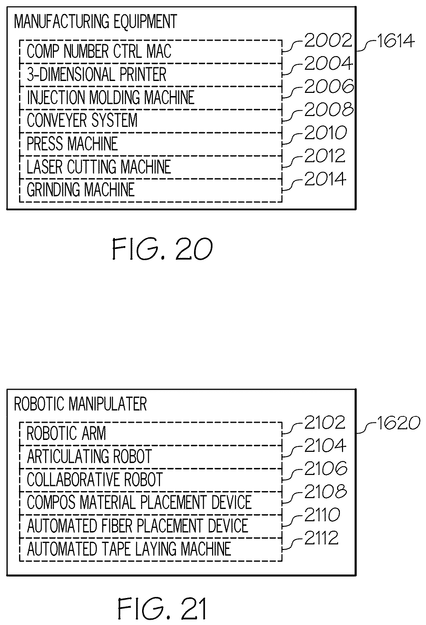

Referring generally to Figs 16-27, 28A-B, 29-32, 33A-B and 34-43, by way of examples, the present disclosure is directed to automated systems 1600 for analysis and process control during fabrication of workpieces 1602. Fig. 16 is a functional block diagram of an example of an automated system 1600 for analysis and process control during fabrication of a workpiece 1602. Fig. 17 is a perspective view of an example of a fabrication cell 1616 for the automated system 1600 of Fig. 16. Fig. 18 is a functional block diagram of an example of an analytical computing device 1604 for the automated system 1600 of Fig. 16. Fig. 19 is a functional block diagram of an example of an interim as-built data monitoring device 1624 for the automated system 1600 of Fig. 16. Fig. 20 is a block diagram showing examples of manufacturing equipment 1614 for the automated system 1600 of Fig. 16. Fig. 21 is a block diagram showing examples of a robotic manipulator 1620 for the automated system 1600 of Fig. 16. Fig. 22 is a block diagram showing examples of tooling equipment 1622 for the automated system 1600 of Fig. 16. Fig. 23 is an exploded functional view of an example of a composite workpiece 2300 for the automated system 1600 of Fig. 16.

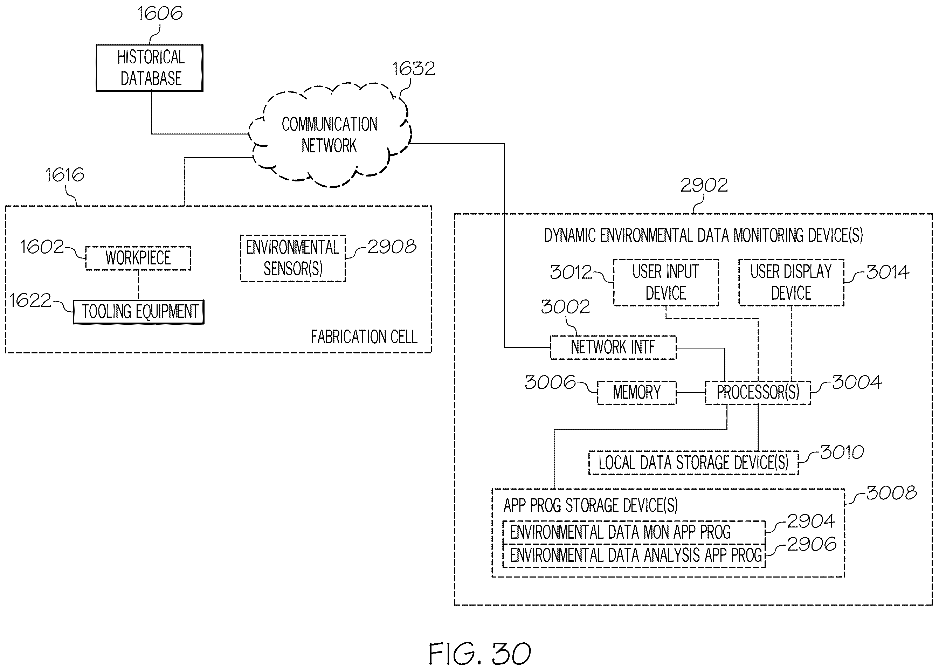

Fig. 24 is a block diagram showing examples of data stored in a historical database 1606 for the automated system 1600 of Fig. 16. Fig. 25 is a block diagram showing examples of design data 2402 and interim as-built data 2504 for the automated system 1600 of Fig. 16. Fig. 26 is a block diagram showing additional examples of interim as-built data 2504 for the automated system 1600 of Fig. 16. Fig. 27 is a block diagram showing examples of a quality detection device 1630 for the automated system 1600 of Fig. 16. Fig. 28A is a block diagram showing examples of a manufacturing process control parameter 2800 for the automated system 1600 of Fig. 16. Fig. 28B is a block diagram showing examples of a design parameter 2814 for the automated system 1600 of Fig. 16. Fig. 29 is a functional block diagram of another example of an automated system 1600 for analysis and process control during fabrication of a workpiece 1602. Fig. 30 is a functional block diagram of an example of a dynamic environmental data monitoring device 2902 for the automated system 1600 of Fig. 29. Fig. 31 is a block diagram showing examples of dynamic environmental data 3100 for the automated system 1600 of Fig. 29. Fig. 32 is a block diagram showing examples of an environmental sensor 2908 for the automated system 1600 of Fig. 29.

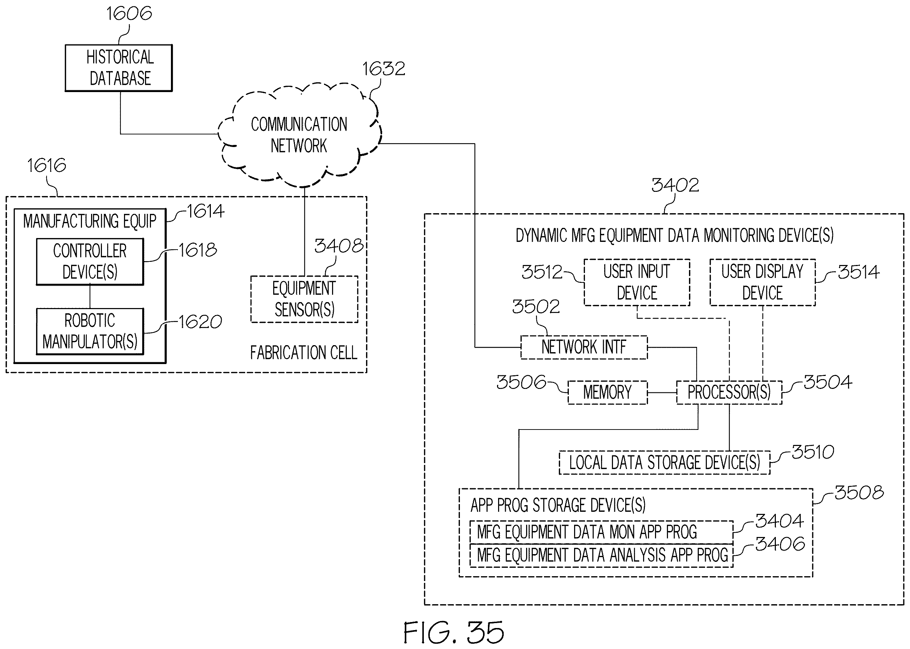

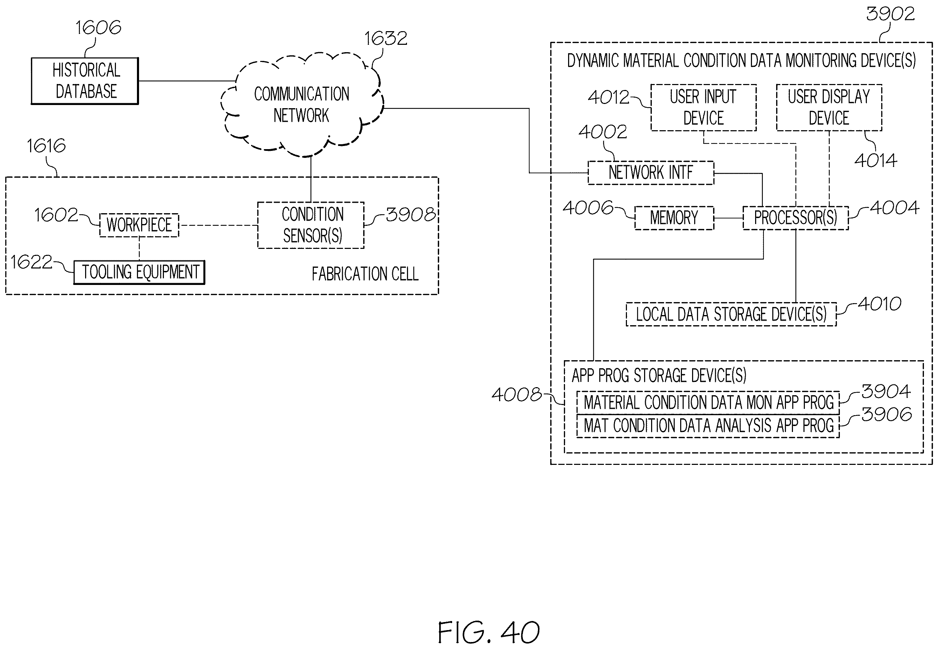

Fig. 33A is a block diagram showing examples of an environmental parameter 3300 for the automated system of Fig. 29. Fig. 33B is a block diagram showing examples of a communication account 1648 for the automated systems 1600 of Fig. 16, Fig. 29, Fig. 34 and Fig. 39. Fig. 34 is a functional block diagram of yet another example of an automated system 1600 for analysis and process control during fabrication of a workpiece 1602. Fig. 35 is a functional block diagram of an example of a dynamic manufacturing equipment data monitoring device 3402 for the automated system 1600 of Fig. 34. Fig. 36 is a block diagram showing examples of dynamic manufacturing equipment data 3600 for the automated system 1600 of Fig. 34. Fig. 37 is a block diagram showing examples of an equipment sensor 3408 for the automated system 1600 of Fig. 34. Fig. 38 is a block diagram showing examples of a manufacturing equipment parameter 3800 for the automated system 1600 of Fig. 29. Fig. 39 is a functional block diagram of still another example of an automated system 1600 for analysis and process control during fabrication of a workpiece 1602. Fig. 40 is a functional block diagram of an example of a dynamic material condition data monitoring device 3902 for the automated system 1600 of Fig. 39. Fig. 41 is a block diagram showing examples of dynamic material condition data 4100 for the automated system 1600 of Fig. 39. Fig. 42 is a block diagram showing examples of a condition sensor 3908 for the automated system 1600 of Fig. 39. Fig. 43 is a block diagram showing examples of a material parameter 2406 for the automated system 1600 of Fig. 39.

With reference again to Figs 16-27, 28A-B, 29-32, 33A-B and 34-43, in one or more examples, an automated system 1600 (see Fig. 16) for analysis and process control during fabrication of a workpiece 1602 is disclosed. The automated system 1600 includes at least one analytical computing device 1604, manufacturing equipment 1614, tooling equipment 1622 and at least one interim as-built data monitoring device 1624. The at least one analytical computing device 1604 with access to a historical database 1606. The at least one analytical computing device 1604 storing a gridded design structure analysis application program 1608, an inconsistency analysis application program 1610 and a probability analysis application program 1612. The manufacturing equipment 1614 in a fabrication cell 1616 and in operative communication with the at least one analytical computing device 1604. The manufacturing equipment 1614 including at least one controller device 1618 and at least one robotic manipulator 1620. The tooling equipment 1622 in the fabrication cell 1616 and configured to at least temporarily retain the workpiece 1602 during the fabrication. The at least one interim as-built data monitoring device 1624 with access to the historical database 1606. The at least one interim as-built data monitoring device 1624 storing an as-built data monitoring application program 1626 and an as-built data analysis application program 1628. The at least one interim as-built data monitoring device 1624 in operative communication with the at least one analytical computing device 1604. The at least one interim as-built data monitoring device 1624 including at least one quality detection device 1630 in the fabrication cell 1616.

In some examples of the automated system 1600, the at least one analytical computing device 1604 includes a network interface 1802, at least one processor 1804 and associated memory 1806, at least one application program storage device 1808 and at least one local data storage device 1810. The network interface 1802 in operative communication with a communication network 1632. The at least one processor 1804 in operative communication with the historical database 1606 via the network interface 1802 and the communication network 1632. The at least one application program storage device 1808 in operative communication with the at least one processor 1804 and storing the gridded design structure analysis application program 1608, the inconsistency analysis application program 1610 and the probability analysis application program 1612. The at least one local data storage device 1810 configured to at least temporarily store data generated by the gridded design structure analysis application program 1608, the inconsistency analysis application program 1610 and the probability analysis application program 1612.

In some examples of the automated system 1600, the at least one interim as-built data monitoring device 1624 including a network interface 1902, at least one processor 1904 and associated memory 1906, at least one application program storage device 1908 and at least one local data storage device 1910. The network interface 1902 in operative communication with a communication network 1632. The at least one processor 1904 in operative communication with the historical database 1606 via the network interface 1902 and the communication network 1632. The at least one application program storage device 1908 in operative communication with the at least one processor 1904 and storing the as-built data monitoring application program 1626 and the as-built data analysis application program 1628. The at least one local data storage device 1910 configured to at least temporarily store data generated by the as-built data monitoring application program 1626 and the as-built data analysis application program 1628.

In some examples, the automated system 1600 also includes at least one dynamic environmental data monitoring device 2902 in operative communication with the at least one analytical computing device 1604. In this and certain other examples, the at least one dynamic environmental data monitoring device 2902 including a network interface 3002, at least one processor 3004 and associated memory 3006, at least one application program storage device 3008, at least one local data storage device 3010 and at least one environmental sensor 2908. The network interface 3002 is in operative communication with a communication network 1632. The at least one processor 3004 in operative communication with the at least one analytical computing device 1604 via the network interface 3002 and the communication network 1632. The at least one application program storage device 3008 in operative communication with the at least one processor 3004 and storing an environmental data monitoring application program 2904 and an environmental data analysis application program 2906. The at least one local data storage device 3010 configured to at least temporarily store data generated by the environmental data monitoring application program 2904 and the an environmental data analysis application program 2906. The at least one environmental sensor 2908 located in the fabrication cell 1616 and in operative communication with the at least one processor 3004.

In some examples, the automated system 1600 also includes at least one dynamic manufacturing equipment data monitoring device 3402 in operative communication with the at least one analytical computing device 1604. The at least one dynamic manufacturing equipment data monitoring device 3402 including a network interface 3502, at least one processor 3504 and associated memory 3506, at least one application program storage device 3508, at least one local data storage device 3510 and at least one equipment sensor 3408. The network interface 3502 is in operative communication with a communication network 1632. The at least one processor 3504 in operative communication with the at least one analytical computing device 1604 via the network interface 3502 and the communication network 1632. The at least one application program storage device 3508 in operative communication with the at least one processor 3504 and storing a manufacturing equipment data monitoring application program 3404 and a manufacturing equipment data analysis application program 3406. The at least one local data storage device 3510 configured to at least temporarily store data generated by the manufacturing equipment data monitoring application program 3404 and the manufacturing equipment data analysis application program 3406. The at least one equipment sensor 3408 is located in the fabrication cell 1616 and in operative communication with the at least one processor 3504.

In some examples, the automated system 1600 also includes at least one dynamic material condition data monitoring device 3902 in operative communication with the at least one analytical computing device 1604. The at least one dynamic material condition data monitoring device 3902 including a network interface 4002, at least one processor 4004 and associated memory 4006, at least one application program storage device 4008, at least one local data storage device 4010 and at least one condition sensor 3908. The network interface 4002 in operative communication with a communication network 1632. The at least one processor 4004 in operative communication with the at least one analytical computing device 1604 via the network interface 4002 and the communication network 1632. The at least one application program storage device 4008 in operative communication with the at least one processor 4004 and storing a material condition data monitoring application program 3904 and a material condition data analysis application program 3906. The at least one local data storage device 4010 configured to at least temporarily store data generated by the material condition data monitoring application program 3904 and the material condition data analysis application program 3906. The at least one condition sensor 3908 is located in the fabrication cell 1616 and in operative communication with the at least one processor 4004.

In some examples of the automated system 1600, the manufacturing equipment 1614 includes a computer numerical control machine 2002, a three-dimensional printer 2004, an injection molding machine 2006, a conveyor system 2008, a press machine 2010, a laser cutting machine 2012, a grinding machine 2014 or any other suitable manufacturing equipment in any suitable combination. In some examples of the automated system 1600, the at least one robotic manipulator 1620 includes a robotic arm 2102, an articulating robot 2104, a collaborative robot 2106, a composite material placement device 2108, an automated fiber placement device 2110, an automated tape laying device 2112 or any other suitable robotic manipulator in any suitable combination. In some examples of the automated system 1600, the tooling equipment 1622 includes a layup tool 2202, a layup mandrel 2204, a retention table 2206, a gripping device 2208, a press machine 2210, a support platform 2212 or any other suitable tooling equipment in any suitable combination. In some examples of the automated system 1600, the workpiece 1602 includes a composite workpiece 2300. In some examples of the automated system 1600, the fabrication of the workpiece 1602 includes laying up multiple layers 2302 of composite material 2304.

In some examples of the automated system 1600, the historical database 1606 includes design data 2402 for the workpiece 1602, a bill of materials 2404 for the workpiece 1602, material parameters 2406 associated with items in the bill of materials 2404, historical interim as-built data 2408 related to fabrication of the workpiece 1602, historical dynamic environmental data 2410 related to fabrication of the workpiece 1602, historical manufacturing equipment data 2412 related to fabrication of the workpiece 1602, historical material condition data 2414 related to fabrication of the workpiece 1602 or any other suitable type of data in any suitable combination. In some examples , the design data 2402 for the workpiece 1602 is decomposed into a gridded design structure 2502 for registering with the interim as-built data 2504 and the historical interim as-built data 2408. In some examples of the automated system 1600, the interim as-built data 2504 for the workpiece 1602 is decomposed into a gridded as-built data structure 2506 for registering with design data 2402 for the workpiece 1602. In some examples of the automated system 1600, the interim as-built data 2504 includes three-dimensional surface information 2602, dimensional information 2604, orientation information 2606, contour information 2608, locational information 2610 in relation to a gridded as-built data structure 2506 for one or more interim versions of the workpiece 1602 or any other suitable type of information in any suitable combination. In some examples of the automated system 1600, the at least one quality detection device 1630 includes a profilometer 2702, a vision system 2704 or any other suitable quality detection device in any suitable combination. In some examples of the automated system 1600, one or more of the at least one analytical computing device 1604 and the interim as-built data monitoring device 1624 includes a neural network 1634 in operative communication with the historical database 1606. In some examples, the neural network 1634 is configured to use interim as-built data 2504 in conjunction with the historical database 1606 and a machine learning model 1636.

In some examples of the automated system 1600, the at least one analytical computing device 1604 and the interim as-built data monitoring device 1624 are configured to obtain access to the historical database 1606, which is related to fabrication of the workpiece 1602. The interim as-built data monitoring device 1624, in conjunction with running the as-built data monitoring application program 1626, is configured to collect interim as-built data 2504 for an interim version of the workpiece 1602 using the at least one quality detection device 1630 during the fabrication of the workpiece 1602. The interim as-built data monitoring device 1624, in conjunction with running the as-built data analysis application program 1628, is configured to process the interim as-built data 2504 and the historical database 1606 to identify at least one inconsistency in the interim version of the workpiece 1602. The at least one analytical computing device 1604, in conjunction with running the inconsistency analysis application program 1610, is configured to process the at least one inconsistency and the historical database 1606 to identify a probability for each inconsistency. The at least one analytical computing device 1604, in conjunction with running the probability analysis application program 1612, is configured to determine whether each probability is unacceptable or acceptable based at least in part on the historical database 1606. In some examples, for each probability that is unacceptable, the at least one analytical computing device 1604 is configured to identify design data 2402 for the workpiece 1602 within the historical database 1606. In this and certain other examples, the at least one analytical computing device 1604, in conjunction with running a statistical analysis application program 1638, is configured to predict the fabrication of the workpiece 1602 would result in a quality issue if the inconsistency associated with the probability is unacceptable and is not changed during the fabrication.

In an as-built data example of the automated system 1600, the at least one analytical computing device 1604, in conjunction with running a design parameter analysis application program 1640, is configured to identify design parameters 2814 within the design data 2402 related to the probability. In this and certain other examples, the at least one analytical computing device 1604, in conjunction with running the design parameter analysis application program 1640, is configured to compare the interim as-built data 2504 to the design parameters 2814 to identify one or more design parameters 2814 for which the interim as-built data 2504 is out of tolerance.

In some examples, the design parameters 2814 include dimension data 2816, orientation data 2818, location data 2820 of material in relation to a gridded as-built data structure 2506, layer data 2822, overlap data 2824, gap data 2826 between adjacent materials, fastening technique data 2828 between adjacent materials or any other suitable type of data in any suitable combination. In some examples, for each design parameter 2814 for which the interim as-built data 2504 is out of tolerance, the at least one analytical computing device 1604 is configured to obtain access to a process control parameter database 1642 for the fabrication cell 1616, The at least one analytical computing device 1604, in conjunction with running a manufacturing process control application program 1644, is configured to identify at least one manufacturing process control parameter 2800 within the process control parameter database 1642 related to the interim as-built data 2504 that is out of tolerance. The at least one analytical computing device 1604, in conjunction with running a process control optimization application program 1646, is configured to process the at least one manufacturing process control parameter 2800 to form one or more optimized manufacturing process control parameters that are expected to bring the interim as-built data 2504 closer to tolerance or within tolerance and expected to reduce the probability.

In some examples, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 or any other suitable type of data in any suitable combination. In some examples, the at least one analytical computing device 1604 is configured to communicate the one or more optimized manufacturing process control parameters to the at least one controller device 1618 of the manufacturing equipment 1614 during the fabrication of the workpiece 1602. In some examples, the at least one analytical computing device 1604 is configured to communicate the one or more optimized manufacturing process control parameters to one or more communication accounts 1648 accessible to an operator of the automated system 1600 being used for fabrication of the workpiece 1602 during the fabrication. In some examples, the one or more communication accounts 1648 includes an electronic mail account 3312, a text messaging account 3314, a voice messaging account 3316, a video messaging account 3318, a short messaging service account 3320 or any other suitable communication account in any suitable combination.

In an environmental data example of the automated system 1600, for each probability that is unacceptable, at least one dynamic environmental data monitoring device 2902, in conjunction with running an environmental data monitoring application program 2904, is configured to collect dynamic environmental data 3100 using at least one environmental sensor 2908 during the fabrication of the workpiece 1602. The at least one dynamic environmental data monitoring device 2902, in conjunction with running an environmental data analysis application program 2906, is configured to identify environmental parameters 3300 within the historical database 1606 related to the corresponding probability. The at least one dynamic environmental data monitoring device 2902, in conjunction with running the environmental data analysis application program 2906, is configured to compare the dynamic environmental data 3100 to the environmental parameters 3300 to identify one or more environmental parameters 3300 for which the dynamic environmental data 3100 is out of tolerance.

In some examples, the dynamic environmental data 3100 includes humidity information 3102, temperature information 3104, air content information 3106, air pressure information 3108, light information 3110 or any other suitable type of information in any suitable combination. In some examples, the at least one environmental sensor 2908 includes a humidity sensor 3202, a temperature sensor 3204, an oxygen sensor 3206, a carbon monoxide sensor 3208, a carbon dioxide sensor 3210, an explosive gas sensor 3212, an air pressure sensor 3214, a light sensor 3216, a photodetector 3218, a photosensor 3220 or any other suitable environmental sensor in any suitable combination. In some examples, the environmental parameters 3300 include humidity data 3302, temperature data 3304, air content data 3306, air pressure data 3308, light data 3310 or any other suitable type of data in any suitable combination. In some examples, for each environmental parameter 3300 for which the dynamic environmental data 3100 is out of tolerance, the at least one analytical computing device 1604 is configured to obtain access to a process control parameter database 1642 for a fabrication cell 1616 used for fabrication of the workpiece 1602. The at least one analytical computing device 1604, in conjunction with running a manufacturing process control application program 1644, is configured to identify at least one manufacturing process control parameter 2800 within the process control parameter database 1642 related to the dynamic environmental data 3100 that is out of tolerance. The at least one analytical computing device 1604, in conjunction with running a process control optimization application program 1646, is configured to process the at least one manufacturing process control parameter 2800 to form one or more optimized manufacturing process control parameters that are expected to bring the dynamic environmental data 3100 closer to tolerance or within tolerance and expected to reduce the probability.

In some examples, the at least one manufacturing process control parameter 2800 includes humidity data 2802 within the fabrication cell 1616, temperature data 2804 within the fabrication cell 1616, heating setpoint data 2806 for heater equipment, cooling setpoint data 2808 for cooling equipment, speed data 2810 of one or more components of manufacturing equipment 1614, compaction force data 2812 of at least one component of the manufacturing equipment 1614 or any other suitable type of data in any suitable combination. In some examples, the at least one analytical computing device 1604 is configured to communicate the one or more optimized manufacturing process control parameters to an automated system 1600 being used for fabrication of the workpiece 1602 during the fabrication. In some examples, the at least one analytical computing device 1604 is configured to communicate the one or more optimized manufacturing process control parameters to one or more communication accounts 1648 accessible to an operator of an automated system 1600 being used for fabrication of the workpiece 1602 during the fabrication.

In a manufacturing equipment data example of the automated system 1600, for each probability that is unacceptable, at least one dynamic manufacturing equipment data monitoring device 3402, in conjunction with running a manufacturing equipment data monitoring application program 3404, is configured to collect dynamic manufacturing equipment data 3600 using at least one equipment sensor 3408 during the fabrication of the workpiece 1602. The at least one dynamic manufacturing equipment data monitoring device 3402, in conjunction with running a manufacturing equipment data analysis application program 3406, is configured to identify manufacturing equipment parameters 3800 within the historical database 1606 related to the corresponding probability. The at least one dynamic manufacturing equipment data monitoring device 3402, in conjunction with running the manufacturing equipment data analysis application program 3406, is configured to compare the dynamic manufacturing equipment data 3600 to the manufacturing equipment parameters 3800 to identify one or more manufacturing equipment parameters 3800 for which the dynamic manufacturing equipment data 3600 is out of tolerance.

In some examples, the dynamic manufacturing equipment data 3600 includes speed information 3602 for one or more components of manufacturing equipment 1614, temperature information 3604 for one or more of heater equipment and cooling equipment, force information 3606 for compaction equipment, flow information 3608 for one or more of air ventilation components and liquid cooling equipment, position information 3610 for one or more components of manufacturing equipment 1614 or any other suitable type of information in any suitable combination. In some examples, the at least one equipment sensor 3408 includes a speed sensor 3702, a heater temperature sensor 3704, a cooling temperature sensor 3706, a force sensor 3708, an air flow sensor 3710, a liquid flow sensor 3712, a position sensor 3714, a proximity sensor 3716 or any other suitable equipment sensor in any suitable combination.

In some examples, the manufacturing equipment parameters 3800 include speed data 3802, speed data 3804, force data 3806, air flow data 3808, liquid flow data 3810, position data 3812 or any other suitable type of data in any suitable combination. In some examples, for each manufacturing equipment parameter 3800 for which the dynamic manufacturing equipment data 3600 is out of tolerance, the analytical computing device 1604 is configured to obtain access to a process control parameter database 1642 for a fabrication cell 1616 used for fabrication of the workpiece 1602. The analytical computing device 1604, in conjunction with running a manufacturing process control application program 1644, is configured to identify at least one manufacturing process control parameter 2800 within the process control parameter database 1642 related to the dynamic manufacturing equipment data 3600 that is out of tolerance. The analytical computing device 1604, in conjunction with running a process control optimization application program 1646, is configured to process the at least one manufacturing process control parameter 2800 to form one or more optimized manufacturing process control parameters that are expected to bring the dynamic manufacturing equipment data 3600 closer to tolerance or within tolerance and expected to reduce the probability.

In some examples, the analytical computing device 1604 is configured to communicate the one or more optimized manufacturing process control parameters to an automated system 1600 being used for fabrication of the workpiece 1602 during the fabrication. In some examples, the analytical computing device 1604 is configured to communicate the one or more optimized manufacturing process control parameters to one or more communication accounts 1648 accessible to an operator of an automated system 1600 being used for fabrication of the workpiece 1602 during the fabrication.

In a material condition data example of the automated system 1600, for each probability that is unacceptable, at least one dynamic material condition data monitoring device 3902, in conjunction with running a material condition data monitoring application program 3904, is configured to collect dynamic material condition data 4100 using at least one condition sensor 3908 during the fabrication of the workpiece 1602. The at least one dynamic material condition data monitoring device 3902, in conjunction with running a material condition data analysis application program 3906, is configured to identify material parameters 2406 within the historical database 1606 related to the corresponding probability. The at least one dynamic material condition data monitoring device 3902, in conjunction with running the material condition data analysis application program 3906, is configured to compare the dynamic material condition data 4100 to the material parameters 2406 to identify one or more material parameters 2406 for which the dynamic material condition data 4100 is out of tolerance.

In some examples, the dynamic material condition data 4100 includes fiber volume information 4102, resin volume information 4104, out time information 4106, temperature information 4108, tackiness information 4110, stiffness information 4112, elastomeric measurement information 4114, force information 4116, flow information 4118, position information 4120 or any other suitable type of information in any suitable combination. In some examples, the at least one condition sensor 3908 includes a vision system 4202, a profilometer 4204, an optical sensor 4206, a photodetector 4208, a photosensor 4210, an ambient air content sensor 4212, a temperature sensor 4214, a force sensor 4216, an air flow sensor 4218, a position sensor 4220, a proximity sensor 4222 or any other suitable condition sensor in any suitable combination. In some examples, the material parameters 2406 include dimension data 4302, orientation data 4304, location data 4306 in relation to a gridded as-built data structure 2506, layer data 4308, overlap data 4310, gap data 4312, fastening technique data 4314 between adjacent materials, fiber volume data 4316, resin volume data 4318, out time data 4320, temperature data 4322, tackiness data 4324, stiffness data 4326, elastomeric properties data 4328, force properties data 4330, air flow data 4332 or any other suitable type of data in any suitable combination.

In some examples, for each material parameter 2406 for which the dynamic material condition data 4100 is out of tolerance, the at least one analytical computing device 1604 is configured to obtain access to a process control parameter database 1642 for a fabrication cell 1616 used for fabrication of the workpiece 1602. The analytical computing device 1604, in conjunction with running a manufacturing process control application program 1644, is configured to identify at least one manufacturing process control parameter 2800 within the process control parameter database 1642 related to the dynamic material condition data 4100 that is out of tolerance. The analytical computing device 1604, in conjunction with running a process control optimization application program 1646, is configured to process the at least one manufacturing process control parameter 2800 to form one or more optimized manufacturing process control parameters that are expected to bring the dynamic material condition data 4100 closer to tolerance or within tolerance and expected to reduce the probability.

In some examples, the at least one analytical computing device 1604 is configured to communicate the one or more optimized manufacturing process control parameters to an automated system 1600 being used for fabrication of the workpiece 1602 during the fabrication. In some examples, the at least one analytical computing device 1604 is configured to communicate the one or more optimized manufacturing process control parameters to one or more communication accounts 1648 accessible to an operator of an automated system 1600 being used for fabrication of the workpiece 1602 during the fabrication.

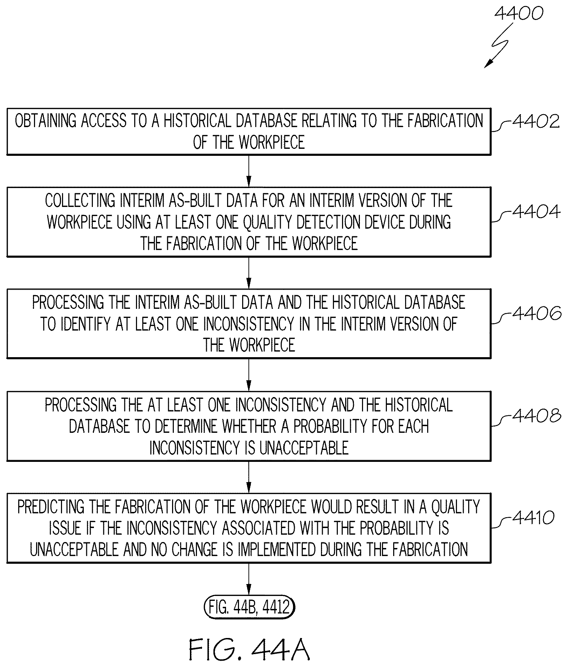

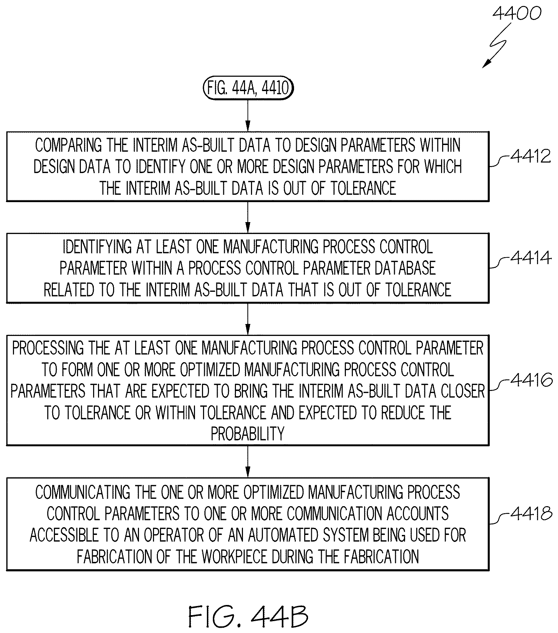

Referring generally to Figs 16, 24, 25, 28A-B and 44A-B, by way of examples, the present disclosure is directed to methods 4400 for analysis and process control during fabrication of workpieces 1602. Fig. 16 is a functional block diagram of an example of an automated system 1600 for analysis and process control during fabrication of a workpiece 1602. Fig. 24 is a block diagram showing examples of data stored in a historical database 1606 for the automated system 1600 of Fig. 16. Fig. 25 is a block diagram showing examples of design data 2402 and interim as-built data 2504 for the automated system 1600 of Fig. 16. Fig. 28A is a block diagram showing examples of a manufacturing process control parameter 2800 for the automated system 1600 of Fig. 16. Fig. 28B is a block diagram showing examples of a design parameter 2814 for the automated system 1600 of Fig. 16. Figs. 44A-B provide the method 4400 for analysis and process control during fabrication of a workpiece 1602.

With reference again to Figs 16, 24, 25, 28A-B and 44A-B, in one or more examples, a method 4400 (see Figs. 44A-B) for analysis and process control during fabrication of a workpiece 1602 includes obtaining 4402 access to a historical database 1606 relating to the fabrication of the workpiece 1602. At 4404, interim as-built data 2504 for an interim version of the workpiece 1602 is collected using at least one quality detection device 1630 during the fabrication of the workpiece 1602. At 4406, the process identifies the interim as-built data 2504 and the historical database 1606 to identify at least one inconsistency in the interim version of the workpiece 1602. At 4408, the at least one inconsistency and the historical database 1606 is processed to determine whether a probability for each inconsistency is unacceptable. At 4410, the process predicts the fabrication of the workpiece 1602 would result in a quality issue if the inconsistency associated with the probability is unacceptable and no change is implemented during the fabrication. At 4412, the interim as-built data 2504 is compared to design parameters 2814 within design data 2402 to identify one or more design parameters 2814 for which the interim as-built data 2504 is out of tolerance. At 4414, at least one manufacturing process control parameter 2800 is identified within a process control parameter database 1642 related to the interim as-built data 2504 that is out of tolerance. At 4416, the at least one manufacturing process control parameter 2800 is processed to form one or more optimized manufacturing process control parameters that are expected to bring the interim as-built data 2504 closer to tolerance or within tolerance and expected to reduce the probability. At 4418, the one or more optimized manufacturing process control parameters is communicated to one or more communication accounts 1648 accessible to an operator of an automated system 1600 being used for fabrication of the workpiece 1602 during the fabrication.

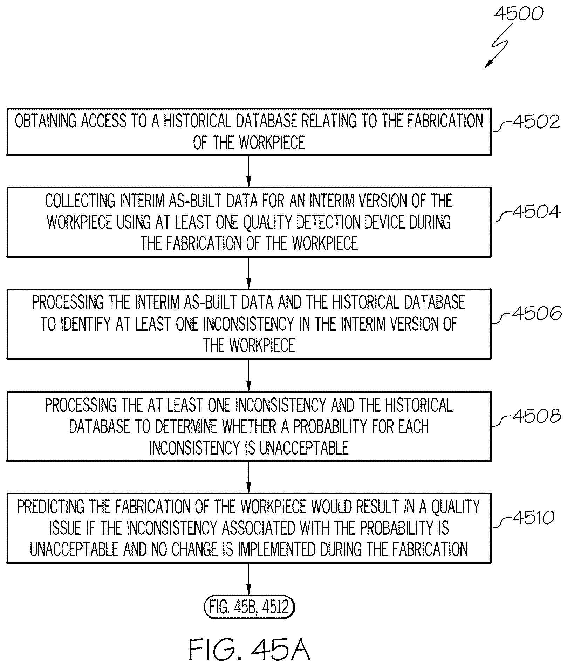

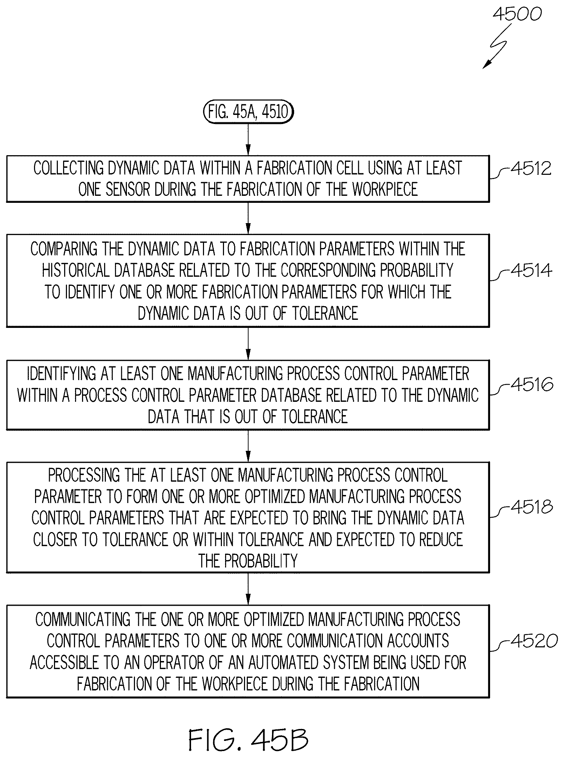

Referring generally to Figs 16, 25 and 45A-B, by way of examples, the present disclosure is directed to methods 4500 for analysis and process control during fabrication of workpieces 1602. Fig. 16 is a functional block diagram of an example of an automated system 1600 for analysis and process control during fabrication of a workpiece 1602. Fig. 25 is a block diagram showing examples of design data 2402 and interim as-built data 2504 for the automated system 1600 of Fig. 16. Figs. 45A-B provide the method 4500 for analysis and process control during fabrication of a workpiece 1602.

With reference again to Figs 16, 25 and 45A-B, in one or more examples, a method 4500 (see Figs. 45A-B) for analysis and process control during fabrication of a workpiece 1602 includes obtaining 4502 access to a historical database 1606 relating to the fabrication of the workpiece 1602. At 4504, interim as-built data 2504 is collected for an interim version of the workpiece 1602 using at least one quality detection device 1630 during the fabrication of the workpiece 1602. At 4506, the interim as-built data 2504 and the historical database 1606 is processed to identify at least one inconsistency in the interim version of the workpiece 1602. At 4508, the at least one inconsistency and the historical database 1606 is processed to determine whether a probability for each inconsistency is unacceptable. At 4510, the process predicts the fabrication of the workpiece 1602 would result in a quality issue if the inconsistency associated with the probability is unacceptable and no change is implemented during the fabrication. At 4512, dynamic data within a fabrication cell 1616 is collected using at least one sensor during the fabrication of the workpiece 1602, At 4514, the dynamic data is compared to fabrication parameters within the historical database 1606 related to the corresponding probability to identify one or more fabrication parameters for which the dynamic data is out of tolerance. At 4516, at least one manufacturing process control parameter 2800 is identified within a process control parameter database 1642 related to the dynamic data that is out of tolerance. At 4518, the at least one manufacturing process control parameter 2800 is processed to form one or more optimized manufacturing process control parameters that are expected to bring the dynamic data closer to tolerance or within tolerance and expected to reduce the probability. At 4520, the one or more optimized manufacturing process control parameters are communicated to one or more communication accounts 1648 accessible to an operator of an automated system 1600 being used for fabrication of the workpiece 1602 during the fabrication.

Referring generally to Figs 16, 24, 25 and 28A-B, by way of examples, the present disclosure is directed to methods 4400 for analysis and process control during fabrication of workpieces 1602. Fig. 16 is a functional block diagram of an example of an automated system 1600 for analysis and process control during fabrication of a workpiece 1602. Fig. 24 is a block diagram showing examples of data stored in a historical database 1606 for the automated system 1600 of Fig. 16. Fig. 25 is a block diagram showing examples of design data 2402 and interim as-built data 2504 for the automated system 1600 of Fig. 16. Fig. 28A is a block diagram showing examples of a manufacturing process control parameter 2800 for the automated system 1600 of Fig. 16. Fig. 28B is a block diagram showing examples of a design parameter 2814 for the automated system 1600 of Fig. 16.

With reference again to Figs 16, 24, 25 and 28A-B, in one or more examples, an automated system 1600 (see Fig. 16) for analysis and process control during fabrication of a workpiece 1602 includes an analytical computing device 1604, manufacturing equipment 1614, tooling equipment 1622 and an interim as-built data monitoring device 1624. The analytical computing device 1604 with access to a historical database 1606. The manufacturing equipment 1614 in a fabrication cell 1616. The tooling equipment 1622 configured to temporarily retain the workpiece 1602 and an interim as-built data monitoring device 1624. The interim as-built data monitoring device 1624 is configured to collect interim as-built data 2504 for an interim version of the workpiece 1602 using the quality detection device 1630 during the fabrication of the workpiece 1602. The interim as-built data monitoring device 1624 is configured to process the interim as-built data 2504 and the historical database 1606 to identify an inconsistency in the interim version of the workpiece 1602. The analytical computing device 1604 is configured to process the inconsistency and the historical database 1606 to determine whether a probability for each inconsistency is unacceptable. The analytical computing device 1604 is configured to predict the fabrication of the workpiece 1602 would result in a quality issue if the inconsistency associated with the probability is unacceptable and no change is implemented during the fabrication. The analytical computing device 1604 is configured to compare the interim as-built data 2504 to design parameters 2814 within design data 2402 to identify one or more design parameters 2814 for which the interim as-built data 2504 is out of tolerance. The analytical computing device 1604 is configured to identify a manufacturing process control parameter 2800 within a process control parameter database 1642 related to the interim as-built data 2504 that is out of tolerance. The analytical computing device 1604 is configured to process the manufacturing process control parameter 2800 to form one or more optimized manufacturing process control parameters that are expected to bring the interim as-built data 2504 closer to tolerance or within tolerance and expected to reduce the probability. The analytical computing device 1604 is configured to communicate the one or more optimized manufacturing process control parameters to one or more communication accounts 1648 accessible to an operator of an automated system 1600 being used for fabrication of the workpiece 1602 during the fabrication.

Examples of the methods 200, 300, 400, 500, 600, 700, 800, 900, 1000, 1100, 1200, 1300, 1400, 1500, 4400, 4500 for analysis and process control during fabrication of workpieces 1602 and automated systems 100, 1600 for analysis and process control during fabrication of workpieces 1602 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 16-27, 28A-B, 29-32, 33A-B and 34-43, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1, 16-27, 28A-B,29-32, 33A-B and 34-43, referred to above, need be included in every example and not all elements, features and/or components described herein are necessarily depicted in each illustrative example. Accordingly, some of the elements, features and/or components described and illustrated in Figs. 1, 16-27, 28A-B, 29-32, 33A-B and 34-43 may be combined in various ways without the need to include other features described and illustrated in Figs. 1, 16-27, 28A-B,29-32, 33A-B and 34-43, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1, 16-27, 28A-B, 29-32, 33A-B and 34-43, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1, 16-27, 28A-B, 29-32, 33A-B and 34-43 and such elements, features and/or components may not be discussed in detail herein with reference to each of Figs. 1, 16-27, 28A-B, 29-32,33A-B and 34-43. Similarly, all elements, features and/or components may not be labeled in each of Figs. 1, 16-27, 28A-B, 29-32, 33A-B and 34-43, but reference numerals associated therewith may be utilized herein for consistency.

In Figs. 2-15, 44A-B and 45A-B, referred to above, the blocks may represent operations, steps and/or portions thereof, and lines connecting the various blocks do not imply any particular order or dependency of the operations or portions thereof. It will be understood that not all dependencies among the various disclosed operations are necessarily represented. Figs. 2-15,44A-B and 45A-B and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all the operations described need to be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

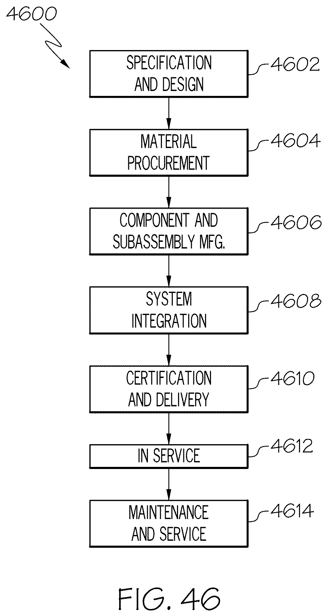

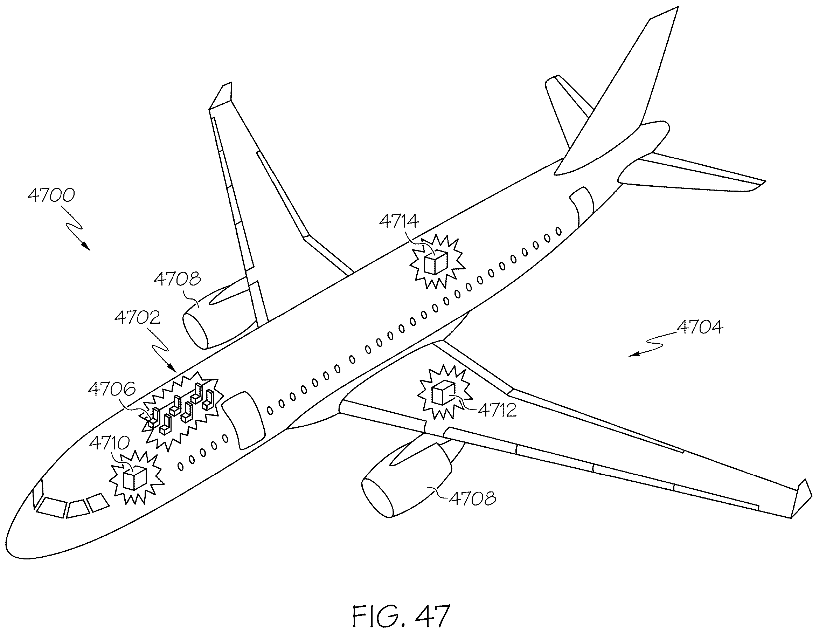

Examples of the subject matter disclosed herein may be described in the context of aircraft manufacturing and service method 4600 as shown in Fig. 46 and aircraft 4700 as shown in Fig. 47. **In** one or more examples, the disclosed methods 200, 300, 400, 500, 600, 700, 800, 900, 1000, 1100, 1200, 1300, 1400, 1500, 4400, 4500 for analysis and process control during fabrication of workpieces 1602 and automated systems 100, 1600 for analysis and process control during fabrication of workpieces 1602 may be used in aircraft manufacturing. During pre-production, the service method 4600 may include specification and design (block 4602) of aircraft 4700 and material procurement (block 4604). During production, component and subassembly manufacturing (block 4606) and system integration (block 4608) of aircraft 4700 may take place. Thereafter, aircraft 4700 may go through certification and delivery (block 4610) to be placed in service (block 4612). While in service, aircraft 4700 may be scheduled for routine maintenance and service (block 4614). Routine maintenance and service may include modification, reconfiguration, refurbishment, etc. of one or more systems of aircraft 4700.

Each of the processes of the service method 4600 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 47, aircraft 4700 produced by the service method 4600 may include airframe 4702 with a plurality of high-level systems 4704 and interior 4706. Examples of high-level systems 4704 include one or more of a propulsion system 4708, an electrical system 4710, a hydraulic system 4712 and an environmental system 4714. Any number of other systems may be included. Although an aerospace example is shown, the principles disclosed herein may be applied to other industries, such as the automotive industry. Accordingly, in addition to aircraft 4700, the principles disclosed herein may apply to other vehicles, e.g., land vehicles, marine vehicles, space vehicles, etc.

The disclosed methods 200, 300, 400, 500, 600, 700, 800, 900, 1000, 1100, 1200, 1300, 1400, 1500, 4400, 4500 for analysis and process control during fabrication of workpieces 1602 and automated systems 100, 1600 for analysis and process control during fabrication of workpieces 1602 may be used in fabrication of aircraft components. For example, components or subassemblies corresponding to component and subassembly manufacturing (block 4606) may be fabricated or manufactured in a manner similar to components or subassemblies produced while aircraft 4700 is in service (block 4612). Also, one or more examples of the system(s), method(s), or combination thereof may be utilized during production stages (block 4606 and block 4608), for example, by substantially expediting assembly of or reducing the cost of aircraft 4700. Similarly, one or more examples of the system or method realizations, or a combination thereof, may be utilized, for example and without limitation, while aircraft 4700 is in service (block 4612) and/or during maintenance and service (block 4614).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the methods 200, 300, 400, 500, 600, 700, 800, 900, 1000, 1100, 1200, 1300, 1400, 1500, 4400, 4500 for analysis and process control during fabrication of workpieces 1602 and automated systems 100, 1600 for analysis and process control during fabrication of workpieces 1602 have been shown and described, modifications may occur to those skilled in the art upon reading the specification. The present application includes such modifications and is limited only by the scope of the claims.

Further examples are set out in the following clauses.

Clause 1. A method for analysis and process control during fabrication of a workpiece, comprising:
obtaining access to a historical database relating to the fabrication of the workpiece;
collecting interim as-built data for an interim version of the workpiece using at least one quality detection device during the fabrication of the workpiece;
processing the interim as-built data and the historical database to identify at least one inconsistency in the interim version of the workpiece;
processing the at least one inconsistency and the historical database to identify a probability for each inconsistency; and
determining whether each probability is unacceptable or acceptable based at least in part on the historical database.

Clause 2. The method of Clause 1 wherein the historical database comprises at least one of design data for the workpiece, a bill of materials for the workpiece, material parameters associated with items in the bill of materials, historical interim as-built data related to fabrication of the workpiece, historical dynamic environmental data related to fabrication of the workpiece, historical manufacturing equipment data related to fabrication of the workpiece and historical material condition data related to fabrication of the workpiece.

Clause 3. The method of Clause 2 wherein the design data for the workpiece is decomposed into a gridded design structure for registering with the interim as-built data and the historical interim as-built data.

Clause 4. The method of any of Clauses 1 to 3 wherein the interim as-built data for the workpiece is decomposed into a gridded as-built data structure for registering with design data for the workpiece.

Clause 5. The method of any of Clauses 1 to 4 wherein at least one of the processing of the interim as-built data, the processing of the at least one inconsistency and the determining whether each probability is unacceptable or acceptable is performed using a neural network in operative communication with the historical database.

Clause 6. The method of Clause 5 wherein the neural network is configured to use the interim as-built data in conjunction with the historical database and a machine learning model.

Clause 7. The method of any of Clauses 1 to 6 wherein the at least one inconsistency comprises an unexpected characteristic of the workpiece during the fabrication of the workpiece.

Clause 8. The method of any of Clauses 1 to7 wherein the probability comprises a statistical likelihood that the inconsistency identified during the fabrication of the workpiece will result in a quality issue.

Clause 9. The method of any of Clauses 1 to 8 wherein the probability is deemed unacceptable when the probability exceeds a predetermined threshold.

Clause 10. The method of any of Clauses 1 to 9 wherein, for each probability that is unacceptable, the method further comprises:
identifying design data for the workpiece within the historical database; and
predicting the fabrication of the workpiece would result in a quality issue if the inconsistency associated with the probability is unacceptable and is not changed during the fabrication.

Clause 11. The method of Clause 10 wherein, for each probability that is unacceptable, the method further comprises:
identifying design parameters within the design data related to the probability; and
comparing the interim as-built data to the design parameters to identify one or more design parameters for which the interim as-built data is out of tolerance.

Clause 12. The method of Clause 11 wherein, for each design parameter for which the interim as-built data is out of tolerance, the method further comprises:
obtaining access to a process control parameter database for a fabrication cell used for fabrication of the workpiece;
identifying at least one manufacturing process control parameter within the process control parameter database related to the interim as-built data that is out of tolerance; and
processing the at least one manufacturing process control parameter to form one or more optimized manufacturing process control parameters that are expected to bring the interim as-built data closer to tolerance or within tolerance and expected to reduce the probability.

Clause 13. The method of Clause 12, further comprising:
communicating the one or more optimized manufacturing process control parameters to an automated system being used for fabrication of the workpiece during the fabrication.

Clause 14. The method of Clause 12 or 13, further comprising:
communicating the one or more optimized manufacturing process control parameters to one or more communication accounts accessible to an operator of an automated system being used for fabrication of the workpiece during the fabrication.

Clause 15. The method of any of Clauses 10 to 14 wherein, for each probability that is unacceptable, the method further comprises:
collecting dynamic environmental data using at least one environmental sensor during the fabrication of the workpiece;
identifying environmental parameters within the historical database related to the corresponding probability; and
comparing the dynamic environmental data to the environmental parameters to identify one or more environmental parameters for which the dynamic environmental data is out of tolerance.

Clause 16. The method of Clause 15 wherein, for each environmental parameter for which the dynamic environmental data is out of tolerance, the method further comprises:
obtaining access to a process control parameter database for a fabrication cell used for fabrication of the workpiece;
identifying at least one manufacturing process control parameter within the process control parameter database related to the dynamic environmental data that is out of tolerance; and
processing the at least one manufacturing process control parameter to form one or more optimized manufacturing process control parameters that are expected to bring the dynamic environmental data closer to tolerance or within tolerance and expected to reduce the probability.

Clause 17. The method of Clause 16, further comprising:
communicating the one or more optimized manufacturing process control parameters to an automated system being used for fabrication of the workpiece during the fabrication.

Clause 18. The method of Clause 16 or 17, further comprising:
communicating the one or more optimized manufacturing process control parameters to one or more communication accounts accessible to an operator of an automated system being used for fabrication of the workpiece during the fabrication.

Clause 19. The method of any of Clause 10 to 18 wherein, for each probability that is unacceptable, the method further comprises:
collecting dynamic manufacturing equipment data using at least one equipment sensor during the fabrication of the workpiece;
identifying manufacturing equipment parameters within the historical database related to the corresponding probability; and
comparing the dynamic manufacturing equipment data to the manufacturing equipment parameters to identify one or more manufacturing equipment parameters for which the dynamic manufacturing equipment data is out of tolerance.

Clause 20. The method of Clause 19 wherein, for each manufacturing equipment parameter for which the dynamic manufacturing equipment data is out of tolerance, the method further comprises:
obtaining access to a process control parameter database for a fabrication cell used for fabrication of the workpiece;
identifying at least one manufacturing process control parameter within the process control parameter database related to the dynamic manufacturing equipment data that is out of tolerance; and
processing the at least one manufacturing process control parameter to form one or more optimized manufacturing process control parameters that are expected to bring the dynamic manufacturing equipment data closer to tolerance or within tolerance and expected to reduce the probability.

Clause 21. The method of Claim 20, further comprising:
communicating the one or more optimized manufacturing process control parameters to an automated system being used for fabrication of the workpiece during the fabrication.

Clause 22. The method of Claim 20 or 21, further comprising:
communicating the one or more optimized manufacturing process control parameters to one or more communication accounts accessible to an operator of an automated system being used for fabrication of the workpiece during the fabrication.

Clause 23. The method of any of Clauses 10 to 22 wherein, for each probability that is unacceptable, the method further comprises:
collecting dynamic material condition data using at least one condition sensor during the fabrication of the workpiece;
identifying material parameters within the historical database related to the corresponding probability; and
comparing the dynamic material condition data to the material parameters to identify one or more material parameters for which the dynamic material condition data is out of tolerance.

Clause 24. The method of Clause 23 wherein, for each material parameter for which the dynamic material condition data is out of tolerance, the method further comprises:
obtaining access to a process control parameter database for a fabrication cell used for fabrication of the workpiece;
identifying at least one manufacturing process control parameter within the process control parameter database related to the dynamic material condition data that is out of tolerance; and
processing the at least one manufacturing process control parameter to form one or more optimized manufacturing process control parameters that are expected to bring the dynamic material condition data closer to tolerance or within tolerance and expected to reduce the probability.

Clause 25. The method of Clause 24, further comprising:
communicating the one or more optimized manufacturing process control parameters to an automated system being used for fabrication of the workpiece during the fabrication.

Clause 26. The method of Clause 24 or 25, further comprising:
communicating the one or more optimized manufacturing process control parameters to one or more communication accounts accessible to an operator of an automated system being used for fabrication of the workpiece during the fabrication.

Clause 27. A method for analysis and process control during fabrication of a workpiece, comprising:
obtaining access to a historical database relating to the fabrication of the workpiece and to a process control parameter database for a fabrication cell used for fabrication of the workpiece;
collecting interim as-built data for an interim version of the workpiece, dynamic environmental data, dynamic manufacturing equipment data and dynamic material condition data during the fabrication of the workpiece;
processing the interim as-built data and the historical database to identify at least one inconsistency in the interim version of the workpiece;
processing the at least one inconsistency and the historical database to identify a probability for each inconsistency;
determining whether each probability is unacceptable or acceptable based at least in part on the historical database; and
predicting the fabrication of the workpiece would result in a quality issue if the inconsistency associated with the probability is unacceptable and is not changed during the fabrication.

Clause 28. The method of Clause 27, wherein, for each probability that is unacceptable, the method further comprises:
identifying design data for the workpiece within the historical database;
identifying design parameters within the design data related to the probability; and
comparing the interim as-built data to the design parameters to identify one or more design parameters for which the interim as-built data is out of tolerance.

Clause 29. The method of Clause 28 wherein, for each design parameter for which the interim as-built data is out of tolerance, the method further comprises:
obtaining access to a process control parameter database for a fabrication cell used for fabrication of the workpiece;
identifying at least one manufacturing process control parameter within the process control parameter database related to the interim as-built data that is out of tolerance; and
processing the at least one manufacturing process control parameter to form one or more optimized manufacturing process control parameters that are expected to bring the interim as-built data closer to tolerance or within tolerance and expected to reduce the probability.

Clause 30. The method of any of Clauses 27 to 29 wherein, for each probability that is unacceptable, the method further comprises:
identifying environmental parameters within the historical database related to the corresponding probability; and
comparing the dynamic environmental data to the environmental parameters to identify one or more environmental parameters for which the dynamic environmental data is out of tolerance.

Clause 31. The method of Clause 30 wherein, for each environmental parameter for which the dynamic environmental data is out of tolerance, the method further comprises:
obtaining access to a process control parameter database for a fabrication cell used for fabrication of the workpiece;
identifying at least one manufacturing process control parameter within the process control parameter database related to the environmental parameter for which the dynamic environmental data that is out of tolerance; and
processing the at least one manufacturing process control parameter to form one or more optimized manufacturing process control parameters that are expected to bring the dynamic environmental data closer to tolerance or within tolerance and expected to reduce the probability.

Clause 32. The method of any of Clauses 27 to 31 wherein, for each probability that is unacceptable, the method further comprises:
identifying manufacturing equipment parameters within the historical database related to the corresponding probability; and
comparing the dynamic manufacturing equipment data to the manufacturing equipment parameters to identify one or more manufacturing equipment parameters for which that dynamic manufacturing equipment data is out of tolerance.

Clause 33. The method of Clause 32 wherein, for each manufacturing equipment parameter for which that dynamic manufacturing equipment data is out of tolerance, the method further comprises:
obtaining access to a process control parameter database for a fabrication cell used for fabrication of the workpiece;
identifying at least one manufacturing process control parameter within the process control parameter database related to the dynamic manufacturing equipment data that is out of tolerance; and
processing the at least one manufacturing process control parameter to form one or more optimized manufacturing process control parameters that are expected to bring the dynamic manufacturing equipment data closer to tolerance or within tolerance and expected to reduce the probability.

Clause 34. The method of any of Clauses 27 to 33 wherein, for each probability that is unacceptable, the method further comprises:
identifying material parameters within the historical database related to the corresponding probability; and
comparing the dynamic material condition data to the material parameters to identify one or more material parameters for which the dynamic material condition data is out of tolerance.

Clause 35. The method of Clause 34 wherein, for each material parameter for which the dynamic material condition data is out of tolerance, the method further comprises:
obtaining access to a process control parameter database for a fabrication cell used for fabrication of the workpiece;
identifying at least one manufacturing process control parameter within the process control parameter database related to the dynamic material condition data that is out of tolerance; and
processing the at least one manufacturing process control parameter to form one or more optimized manufacturing process control parameters that are expected to bring the dynamic material condition data closer to tolerance or within tolerance and expected to reduce the probability.

Clause 36. An automated system for analysis and process control during fabrication of a workpiece, comprising:
at least one analytical computing device with access to a historical database, the at least one analytical computing device storing a gridded design structure analysis application program, an inconsistency analysis application program and a probability analysis application program;
manufacturing equipment in a fabrication cell and in operative communication with the at least one analytical computing device, the manufacturing equipment comprising at least one controller device and at least one robotic manipulator;
tooling equipment in the fabrication cell and configured to at least temporarily retain the workpiece during the fabrication; and
at least one interim as-built data monitoring device with access to the historical database, the at least one interim as-built data monitoring device storing an as-built data monitoring application program and an as-built data analysis application program, the at least one interim as-built data monitoring device in operative communication with the at least one analytical computing device, the at least one interim as-built data monitoring device comprising at least one quality detection device in the fabrication cell.

Clause 37. The automated system of Clause 36, the at least one analytical computing device, comprising:
a network interface in operative communication with a communication network;
at least one processor and associated memory, the at least one processor in operative communication with the historical database via the network interface and the communication network;
at least one application program storage device in operative communication with the at least one processor and storing the gridded design structure analysis application program, the inconsistency analysis application program and the probability analysis application program; and
at least one local data storage device configured to at least temporarily store data generated by the gridded design structure analysis application program, the inconsistency analysis application program and the probability analysis application program.

Clause 38. The automated system of Clause 36 or 37, the at least one interim as-built data monitoring device, comprising:
a network interface in operative communication with a communication network;
at least one processor and associated memory, the at least one processor in operative communication with the historical database via the network interface and the communication network;
at least one application program storage device in operative communication with the at least one processor and storing the as-built data monitoring application program and the as-built data analysis application program; and
at least one local data storage device configured to at least temporarily store data generated by the as-built data monitoring application program and the as-built data analysis application program.

Clause 39. The automated system of any of Clauses 36 to 38, further comprising:
at least one dynamic environmental data monitoring device in operative communication with the at least one analytical computing device, the at least one dynamic environmental data monitoring device comprising:
a network interface in operative communication with a communication network;
at least one processor and associated memory, the at least one processor in operative communication with the at least one analytical computing device via the network interface and the communication network;
at least one application program storage device in operative communication with the at least one processor and storing an environmental data monitoring application program and an environmental data analysis application program;
at least one local data storage device configured to at least temporarily store data generated by the environmental data monitoring application program and the an environmental data analysis application program; and
at least one environmental sensor located in the fabrication cell and in operative communication with the at least one processor.

Clause 40. The automated system of ay of Clauses 36 to 39, further comprising:
at least one dynamic manufacturing equipment data monitoring device in operative communication with the at least one analytical computing device, the at least one dynamic manufacturing equipment data monitoring device comprising:
a network interface in operative communication with a communication network;
at least one processor and associated memory, the at least one processor in operative communication with the at least one analytical computing device via the network interface and the communication network;
at least one application program storage device in operative communication with the at least one processor and storing a manufacturing equipment data monitoring application program and a manufacturing equipment data analysis application program;
at least one local data storage device configured to at least temporarily store data generated by the manufacturing equipment data monitoring application program and the manufacturing equipment data analysis application program; and
at least one equipment sensor located in the fabrication cell and in operative communication with the at least one processor.

Clause 41. The automated system of any of Clauses 36 to 40, further comprising:
at least one dynamic material condition data monitoring device in operative communication with the at least one analytical computing device, the at least one dynamic material condition data monitoring device comprising:
a network interface in operative communication with a communication network;
at least one processor and associated memory, the at least one processor in operative communication with the at least one analytical computing device via the network interface and the communication network;
at least one application program storage device in operative communication with the at least one processor and storing a material condition data monitoring application program and a material condition data analysis application program;
at least one local data storage device configured to at least temporarily store data generated by the material condition data monitoring application program and the material condition data analysis application program; and
at least one condition sensor located in the fabrication cell and in operative communication with the at least one processor.

Clause 42. The automated system of any of Clauses 36 to 41 wherein one or more of the at least one analytical computing device and the interim as-built data monitoring device comprises a neural network in operative communication with the historical database.

Clause 43. The automated system of Clause 42 wherein the neural network is configured to use interim as-built data in conjunction with the historical database and a machine learning model.

Clause 44. The automated system of any of Clauses 36 to 43 wherein the at least one analytical computing device and the interim as-built data monitoring device are configured to obtain access to the historical database, which is related to fabrication of the workpiece,
wherein the interim as-built data monitoring device, in conjunction with running the as-built data monitoring application program, is configured to collect interim as-built data for an interim version of the workpiece using the at least one quality detection device during the fabrication of the workpiece,
wherein the interim as-built data monitoring device, in conjunction with running the as-built data analysis application program, is configured to process the interim as-built data and the historical database to identify at least one inconsistency in the interim version of the workpiece,
wherein the at least one analytical computing device, in conjunction with running the inconsistency analysis application program, is configured to process the at least one inconsistency and the historical database to identify a probability for each inconsistency, and
wherein the at least one analytical computing device, in conjunction with running the probability analysis application program, is configured to determine whether each probability is unacceptable or acceptable based at least in part on the historical database.

Clause 45. The automated system of Clause 44 wherein, for each probability that is unacceptable, the at least one analytical computing device is configured to identify design data for the workpiece within the historical database, and
wherein, the at least one analytical computing device, in conjunction with running a statistical analysis application program, is configured to predict the fabrication of the workpiece would result in a quality issue if the inconsistency associated with the probability is unacceptable and is not changed during the fabrication.

Clause 46. The automated system of Clause 45 wherein the at least one analytical computing device, in conjunction with running a design parameter analysis application program, is configured to identify design parameters within the design data related to the probability, and
wherein, the at least one analytical computing device, in conjunction with running the design parameter analysis application program, is configured to compare the interim as-built data to the design parameters to identify one or more design parameters for which the interim as-built data is out of tolerance.

Clause 47. The automated system of Clause 46 wherein, for each design parameter for which the interim as-built data is out of tolerance, the at least one analytical computing device is configured to obtain access to a process control parameter database for the fabrication cell,
wherein the at least one analytical computing device, in conjunction with running a manufacturing process control application program, is configured to identify at least one manufacturing process control parameter within the process control parameter database related to the interim as-built data that is out of tolerance, and
wherein the at least one analytical computing device, in conjunction with running a process control optimization application program, is configured to process the at least one manufacturing process control parameter to form one or more optimized manufacturing process control parameters that are expected to bring the interim as-built data closer to tolerance or within tolerance and expected to reduce the probability.

Clause 48. The automated system of Clause 47 wherein the at least one analytical computing device is configured to communicate the one or more optimized manufacturing process control parameters to the at least one controller device of the manufacturing equipment during the fabrication of the workpiece.

Clause 49. The automated system of Clause 47 or 48 wherein the at least one analytical computing device is configured to communicate the one or more optimized manufacturing process control parameters to one or more communication accounts accessible to an operator of the automated system being used for fabrication of the workpiece during the fabrication.

Clause 50. The automated system of any of Clauses 45 to 49 wherein, for each probability that is unacceptable, at least one dynamic environmental data monitoring device, in conjunction with running an environmental data monitoring application program, is configured to collect dynamic environmental data using at least one environmental sensor during the fabrication of the workpiece,
wherein the at least one dynamic environmental data monitoring device, in conjunction with running an environmental data analysis application program, is configured to identify environmental parameters within the historical database related to the corresponding probability, and
wherein the at least one dynamic environmental data monitoring device, in conjunction with running the environmental data analysis application program, is configured to compare the dynamic environmental data to the environmental parameters to identify one or more environmental parameters for which the dynamic environmental data is out of tolerance.

Clause 51. The automated system of Clause 50 wherein, for each environmental parameter for which the dynamic environmental data is out of tolerance, the at least one analytical computing device is configured to obtain access to a process control parameter database for a fabrication cell used for fabrication of the workpiece,
wherein the at least one analytical computing device, in conjunction with running a manufacturing process control application program, is configured to identify at least one manufacturing process control parameter within the process control parameter database related to the dynamic environmental data that is out of tolerance, and
wherein the at least one analytical computing device, in conjunction with running a process control optimization application program, is configured to process the at least one manufacturing process control parameter to form one or more optimized manufacturing process control parameters that are expected to bring the dynamic environmental data closer to tolerance or within tolerance and expected to reduce the probability.

Clause 52. The automated system of Clause 51 wherein the at least one analytical computing device is configured to communicate the one or more optimized manufacturing process control parameters to an automated system being used for fabrication of the workpiece during the fabrication.

Clause 53. The automated system of Clause 51 or 52 wherein the at least one analytical computing device is configured to communicate the one or more optimized manufacturing process control parameters to one or more communication accounts accessible to an operator of an automated system being used for fabrication of the workpiece during the fabrication.

Clause 54. The automated system of any of Clause 45 to 53 wherein, for each probability that is unacceptable, at least one dynamic manufacturing equipment data monitoring device, in conjunction with running a manufacturing equipment data monitoring application program, is configured to collect dynamic manufacturing equipment data using at least one equipment sensor during the fabrication of the workpiece,
wherein the at least one dynamic manufacturing equipment data monitoring device, in conjunction with running a manufacturing equipment data analysis application program, is configured to identify manufacturing equipment parameters within the historical database related to the corresponding probability, and
wherein the at least one dynamic manufacturing equipment data monitoring device, in conjunction with running the manufacturing equipment data analysis application program, is configured to compare the dynamic manufacturing equipment data to the manufacturing equipment parameters to identify one or more manufacturing equipment parameters for which the dynamic manufacturing equipment data is out of tolerance.

Clause 55. The automated system of Clause 54 wherein, for each manufacturing equipment parameter for which the dynamic manufacturing equipment data is out of tolerance, the analytical computing device is configured to obtain access to a process control parameter database for a fabrication cell used for fabrication of the workpiece,
wherein the analytical computing device, in conjunction with running a manufacturing process control application program, is configured to identify at least one manufacturing process control parameter within the process control parameter database related to the dynamic manufacturing equipment data that is out of tolerance, and
wherein the analytical computing device, in conjunction with running a process control optimization application program, is configured to process the at least one manufacturing process control parameter to form one or more optimized manufacturing process control parameters that are expected to bring the dynamic manufacturing equipment data closer to tolerance or within tolerance and expected to reduce the probability.

Clause 56. The automated system of Clause 55 wherein the analytical computing device is configured to communicate the one or more optimized manufacturing process control parameters to an automated system being used for fabrication of the workpiece during the fabrication.

Clause 57. The automated system of Clause 55 or 56 wherein the analytical computing device is configured to communicate the one or more optimized manufacturing process control parameters to one or more communication accounts accessible to an operator of an automated system being used for fabrication of the workpiece during the fabrication.

Clause 58. The automated system of any of Clauses 45 to 57 wherein, for each probability that is unacceptable, at least one dynamic material condition data monitoring device, in conjunction with running a material condition data monitoring application program, is configured to collect dynamic material condition data using at least one condition sensor during the fabrication of the workpiece,
wherein the at least one dynamic material condition data monitoring device, in conjunction with running a material condition data analysis application program, is configured to identify material parameters within the historical database related to the corresponding probability, and
wherein the at least one dynamic material condition data monitoring device, in conjunction with running the material condition data analysis application program, is configured to compare the dynamic material condition data to the material parameters to identify one or more material parameters for which the dynamic material condition data is out of tolerance.

Clause 59. The automated system of Clause 58 wherein, for each material parameter for which the dynamic material condition data is out of tolerance, the at least one analytical computing device is configured to obtain access to a process control parameter database for a fabrication cell used for fabrication of the workpiece,
wherein the analytical computing device, in conjunction with running a manufacturing process control application program, is configured to identify at least one manufacturing process control parameter within the process control parameter database related to the dynamic material condition data that is out of tolerance, and
wherein the analytical computing device, in conjunction with running a process control optimization application program, is configured to process the at least one manufacturing process control parameter to form one or more optimized manufacturing process control parameters that are expected to bring the dynamic material condition data closer to tolerance or within tolerance and expected to reduce the probability.

Clause 60. The automated system of Clause 59 wherein the at least one analytical computing device is configured to communicate the one or more optimized manufacturing process control parameters to an automated system being used for fabrication of the workpiece during the fabrication.

Clause 61. The automated system of Clause 59 or 60 wherein the at least one analytical computing device is configured to communicate the one or more optimized manufacturing process control parameters to one or more communication accounts accessible to an operator of an automated system being used for fabrication of the workpiece during the fabrication.

Clause 62. A method for analysis and process control during fabrication of a workpiece, comprising:
obtaining access to a historical database relating to the fabrication of the workpiece;
collecting interim as-built data for an interim version of the workpiece using at least one quality detection device during the fabrication of the workpiece;
processing the interim as-built data and the historical database to identify at least one inconsistency in the interim version of the workpiece;
processing the at least one inconsistency and the historical database to determine whether a probability for each inconsistency is unacceptable;
predicting the fabrication of the workpiece would result in a quality issue if the inconsistency associated with the probability is unacceptable and no change is implemented during the fabrication;
comparing the interim as-built data to design parameters within design data to identify one or more design parameters for which the interim as-built data is out of tolerance;
identifying at least one manufacturing process control parameter within a process control parameter database related to the interim as-built data that is out of tolerance;
processing the at least one manufacturing process control parameter to form one or more optimized manufacturing process control parameters that are expected to bring the interim as-built data closer to tolerance or within tolerance and expected to reduce the probability; and
communicating the one or more optimized manufacturing process control parameters to one or more communication accounts accessible to an operator of an automated system being used for fabrication of the workpiece during the fabrication.

Clause 63. A method for analysis and process control during fabrication of a workpiece, comprising:
obtaining access to a historical database relating to the fabrication of the workpiece;
collecting interim as-built data for an interim version of the workpiece using at least one quality detection device during the fabrication of the workpiece;
processingthe interim as-built data nd the historical database to identify at least one inconsistency in the interim version of the workpiece;
processing the at least one inconsistency and the historical database to determine whether a probability for each inconsistency is unacceptable;
predicting the fabrication of the workpiece would result in a quality issue if the inconsistency associated with the probability is unacceptable and no change is implemented during the fabrication;
collecting dynamic data within a fabrication cell using at least one sensor during the fabrication of the workpiece;
comparing the dynamic data to fabrication parameters within the historical database related to the corresponding probability to identify one or more fabrication parameters for which the dynamic data is out of tolerance;
identifying at least one manufacturing process control parameter within a process control parameter database related to the dynamic data that is out of tolerance;
processing the at least one manufacturing process control parameter to form one or more optimized manufacturing process control parameters that are expected to bring the dynamic data closer to tolerance or within tolerance and expected to reduce the probability; and
communicating the one or more optimized manufacturing process control parameters to one or more communication accounts accessible to an operator of an automated system being used for fabrication of the workpiece during the fabrication.

Clause 64. An automated system for analysis and process control during fabrication of a workpiece, comprising:
an analytical computing device with access to a historical database;
manufacturing equipment in a fabrication cell;
tooling equipment configured to temporarily retain the workpiece; and
an interim as-built data monitoring device with access to the historical database and comprising a quality detection device,
wherein the interim as-built data monitoring device is configured to collect interim as-built data for an interim version of the workpiece using the quality detection device during the fabrication of the workpiece,
wherein the interim as-built data monitoring device is configured to process the interim as-built data and the historical database to identify an inconsistency in the interim version of the workpiece,
wherein the analytical computing device is configured to process the inconsistency and the historical database to determine whether a probability for each inconsistency is unacceptable,
wherein the analytical computing device is configured to predict the fabrication of the workpiece would result in a quality issue if the inconsistency associated with the probability is unacceptable and no change is implemented during the fabrication,
wherein the analytical computing device is configured to compare the interim as-built data to design parameters within design data to identify one or more design parameters for which the interim as-built data is out of tolerance,
wherein the analytical computing device is configured to identify a manufacturing process control parameter within a process control parameter database related to the interim as-built data that is out of tolerance,
wherein the analytical computing device is configured to process the manufacturing process control parameter to form one or more optimized manufacturing process control parameters that are expected to bring the interim as-built data closer to tolerance or within tolerance and expected to reduce the probability, and
wherein the analytical computing device is configured to communicate the one or more optimized manufacturing process control parameters to one or more communication accounts accessible to an operator of an automated system being used for fabrication of the workpiece during the fabrication.

## Claims

1. A method (200) for analysis and process control during fabrication of a workpiece (1602), comprising:
obtaining (202) access to a historical database (1606) relating to the fabrication of the workpiece (1602);
collecting (204) interim as-built data (2504) for an interim version of the workpiece (1602) using at least one quality detection device (1630) during the fabrication of the workpiece (1602);
processing (206) the interim as-built data (2504) and the historical database (1606) to identify at least one inconsistency in the interim version of the workpiece (1602);
processing (208) the at least one inconsistency and the historical database (1606) to identify a probability for each inconsistency; and
determining (210) whether each probability is unacceptable or acceptable based at least in part on the historical database (1606).

2. The method of Claim 1 wherein:
the historical database (1606) comprises at least one of design data (2402) for the workpiece (1602), a bill of materials (2404) for the workpiece (1602), material parameters (2406) associated with items in the bill of materials (2404), historical interim as-built data (2408) related to fabrication of the workpiece (1602), historical dynamic environmental data (2410) related to fabrication of the workpiece (1602), historical manufacturing equipment data (2412) related to fabrication of the workpiece (1602) and historical material condition data (2414) related to fabrication of the workpiece (1602); and, optionally,
the design data (2402) for the workpiece (1602) is decomposed into a gridded design structure (2502) for registering with the interim as-built data (2504) and the historical interim as-built data (2408).

3. The method of Claim 1 or 2 wherein the interim as-built data (2504) for the workpiece (1602) is decomposed into a gridded as-built data structure (2506) for registering with design data (2402) for the workpiece (1602).

4. The method of any preceding Claim wherein:
at least one of the processing of the interim as-built data (2504), the processing of the at least one inconsistency and the determining whether each probability is unacceptable or acceptable is performed using a neural network (1634) in operative communication with the historical database (1606); and, optionally,
the neural network (1634) is configured to use the interim as-built data (2504) in conjunction with the historical database (1606) and a machine learning model (1636).

5. The method (300) of any preceding Claim wherein, for each probability that is unacceptable, the method further comprises:
identifying (302) design data (2402) for the workpiece (1602) within the historical database (1606); and
predicting (304) the fabrication of the workpiece (1602) would result in a quality issue if the inconsistency associated with the probability is unacceptable and is not changed during the fabrication.

6. The method (300) of Claim 5 wherein, for each probability that is unacceptable, the method further comprises:
identifying (306) design parameters (2814) within the design data (2402) related to the probability; and
comparing (308) the interim as-built data (2504) to the design parameters (2814) to identify one or more design parameters (2814) for which the interim as-built data (2504) is out of tolerance.

7. The method (400) of Claim 6 wherein, for each design parameter (2814) for which the interim as-built data (2504) is out of tolerance, the method further comprises:
obtaining (402) access to a process control parameter database (1642) for a fabrication cell (1616) used for fabrication of the workpiece (1602);
identifying (404) at least one manufacturing process control parameter (2800) within the process control parameter database (1642) related to the interim as-built data (2504) that is out of tolerance; and
processing (406) the at least one manufacturing process control parameter (2800) to form one or more optimized manufacturing process control parameters that are expected to bring the interim as-built data (2504) closer to tolerance or within tolerance and expected to reduce the probability.

8. The method (400) of Claim 7, further comprising:
communicating (408) the one or more optimized manufacturing process control parameters to an automated system (1600) being used for fabrication of the workpiece (1602) during the fabrication; and/or
communicating (410) the one or more optimized manufacturing process control parameters to one or more communication accounts (1648) accessible to an operator of an automated system (1600) being used for fabrication of the workpiece (1602) during the fabrication.

9. The method (500) of any of Claims 5 to 8 wherein, for each probability that is unacceptable, the method further comprises:
collecting (502) dynamic environmental data (3100) using at least one environmental sensor (2908) during the fabrication of the workpiece (1602);
identifying (504) environmental parameters (3300) within the historical database (1606) related to the corresponding probability; and
comparing (506) the dynamic environmental data (3100) to the environmental parameters (3300) to identify one or more environmental parameters (3300) for which the dynamic environmental data (3100) is out of tolerance.

10. The method (600) of Claim 9 wherein, for each environmental parameter (3300) for which the dynamic environmental data (3100) is out of tolerance, the method further comprises:
obtaining (602) access to a process control parameter database (1642) for a fabrication cell (1616) used for fabrication of the workpiece (1602);
identifying (604) at least one manufacturing process control parameter (2800) within the process control parameter database (1642) related to the dynamic environmental data (3100) that is out of tolerance; and
processing (606) the at least one manufacturing process control parameter (2800) to form one or more optimized manufacturing process control parameters that are expected to bring the dynamic environmental data (3100) closer to tolerance or within tolerance and expected to reduce the probability; and, optionally,
communicating (608) the one or more optimized manufacturing process control parameters to an automated system (1600) being used for fabrication of the workpiece (1602) during the fabrication, and/or communicating (610) the one or more optimized manufacturing process control parameters to one or more communication accounts (1648) accessible to an operator of an automated system (1600) being used for fabrication of the workpiece (1602) during the fabrication.

11. The method (700) of any of Claims 5 to 10 wherein, for each probability that is unacceptable, the method further comprises:
collecting (702) dynamic manufacturing equipment data (3600) using at least one equipment sensor (3408) during the fabrication of the workpiece (1602);
identifying (704) manufacturing equipment parameters (3800) within the historical database (1606) related to the corresponding probability; and
comparing (706) the dynamic manufacturing equipment data (3600) to the manufacturing equipment parameters (3800) to identify one or more manufacturing equipment parameters (3800) for which the dynamic manufacturing equipment data (3600) is out of tolerance.

12. The method (800) of Claim 11 wherein, for each manufacturing equipment parameter (3800) for which the dynamic manufacturing equipment data (3600) is out of tolerance, the method further comprises:
obtaining (802) access to a process control parameter database (1642) for a fabrication cell (1616) used for fabrication of the workpiece (1602);
identifying (804) at least one manufacturing process control parameter (2800) within the process control parameter database (1642) related to the dynamic manufacturing equipment data (3600) that is out of tolerance; and
processing (806) the at least one manufacturing process control parameter (2800) to form one or more optimized manufacturing process control parameters that are expected to bring the dynamic manufacturing equipment data (3600) closer to tolerance or within tolerance and expected to reduce the probability; and, optionally,
communicating (808) the one or more optimized manufacturing process control parameters to an automated system (1600) being used for fabrication of the workpiece (1602) during the fabrication, and/or communicating (810) the one or more optimized manufacturing process control parameters to one or more communication accounts (1648) accessible to an operator of an automated system (1600) being used for fabrication of the workpiece (1602) during the fabrication.

13. The method (900) of any of Claims 5 to 12 wherein, for each probability that is unacceptable, the method further comprises:
collecting (902) dynamic material condition data (4100) using at least one condition sensor (3908) during the fabrication of the workpiece (1602);
identifying (904) material parameters (2406) within the historical database (1606) related to the corresponding probability; and
comparing (906) the dynamic material condition data (4100) to the material parameters (2406) to identify one or more material parameters (2406) for which the dynamic material condition data (4100) is out of tolerance.

14. The method (1000) of Claim 13 wherein, for each material parameter (2406) for which the dynamic material condition data (4100) is out of tolerance, the method further comprises:
obtaining (1002) access to a process control parameter database (1642) for a fabrication cell (1616) used for fabrication of the workpiece (1602);
identifying (1004) at least one manufacturing process control parameter (2800) within the process control parameter database (1642) related to the dynamic material condition data (4100) that is out of tolerance; and
processing (1006) the at least one manufacturing process control parameter (2800) to form one or more optimized manufacturing process control parameters that are expected to bring the dynamic material condition data (4100) closer to tolerance or within tolerance and expected to reduce the probability; and, optionally,
communicating (1008) the one or more optimized manufacturing process control parameters to an automated system (1600) being used for fabrication of the workpiece (1602) during the fabrication, and.or communicating (1010) the one or more optimized manufacturing process control parameters to one or more communication accounts (1648) accessible to an operator of an automated system (1600) being used for fabrication of the workpiece (1602) during the fabrication.

15. An automated system (1600) for analysis and process control during fabrication of a workpiece (1602), comprising:
at least one analytical computing device (1604) programmed to perform the method of any preceding Claim.
